# EUROPÄISCHE PATENTSCHRIFT

(11) **EP 4 007 492 B1**
(45) Veröffentlichungstag und Bekanntmachung des Hinweises auf die Patenterteilung: **12.10.2022**
(21) Anmeldenummer: 20842688.2
(22) Anmeldetag: 14.12.2020
(51) Int. Cl.: A01M 21/04, B05B 9/00, B05B 9/04, B05B 12/10

(54) **VORRICHTUNG ZUR THERMISCHEN BEKÄMPFUNG VON UNKRAUT**
DEVICE FOR THE THERMAL CONTROL OF WEEDS
DISPOSITIF POUR LE CONTRÔLE THERMIQUE DES MAUVAISES HERBES

(30) Priorität: 30.04.2020 DE 102020111784
(43) Veröffentlichungstag der Anmeldung: 08.06.2022
(73) Patentinhaber: Haussmann GmbH, 84109 Wörth/Isar (DE)
(72) Erfinder: THANNHUBER, Andreas, 94405 Landau (DE); LICHTL, Friedrich Joachim, 86668 Karlshuld (DE)
(74) Vertreter: Launhardt, Thomas
(86) Internationale Anmeldenummer: PCT/DE2020/101059
(87) Internationale Veröffentlichungsnummer: WO 2021/219152

(56) Entgegenhaltungen:
- EP-A1- 3 008 997
- EP-A1- 3 329 773
- EP-B1- 3 008 997
- WO-A1-94/26102
- WO-A1-98/32332
- DE-A1- 10 122 433
- JP-A- 2003 144 034
- US-A1- 2013 043 275

## Beschreibung

Die Erfindung betrifft eine mobile Vorrichtung zur thermischen Bekämpfung von Unkraut.

Zur Bekämpfung von Unkraut können unterschiedliche Methoden zum Einsatz kommen. Eine zunehmend beliebte Methode ist die thermische Unkrautbekämpfung. Diese Methode nutzt Hitze und den daraus resultierenden Effekt, dass bei einer thermischen Beaufschlagung einer Pflanze mit hoher Temperatur die Zellen der Pflanze aufbrechen. Dadurch kann Eiweiß aus der Pflanze austreten, welches dann zu gerinnen beginnt. Dadurch wiederum wird die Zellstruktur der Pflanze zerstört. Sofern die thermische Beaufschlagung bis in die Wurzel der Pflanze wirkt, kann auf diese Art und Weise auch ein Absterben der Wurzel erreicht werden.

Eine gattungsgemäße mobile Vorrichtung zur thermischen Bekämpfung von Unkraut ist aus der EP 3 008 007 A1 bekannt. Weitere mobile Vorrichtungen zur thermischen Unkrautbekämpfung sind aus der US 2013/0043275 A1 und der JP 2003-144034 A bekannt.

Eine Aufgabe der Erfindung ist es, eine mobile Vorrichtung vorzuschlagen, welche eine Bekämpfung von Unkraut auf thermischem Wege ermöglicht und hinsichtlich der Anordnung ihrer Komponenten optimiert ist. Insbesondere soll die Vorrichtung ergänzend oder alternativ eine Reinigung und/oder eine Desinfektion von Oberflächen ermöglichen.

Die Aufgabe wird mit einer Vorrichtung gelöst, welche die Merkmale des Anspruches 1 aufweist. Darüber hinaus wird zur Lösung der Aufgabe eine Verwendung mit den Merkmalen des Anspruchs 15 vorgeschlagen.

Vorteilhafte Ausführungsformen und/oder Ausgestaltungen und/oder Aspekte der Erfindung ergeben sich aus den Unteransprüchen, der nachfolgenden Beschreibung und den Figuren.

Eine mögliche Ausführungsform einer Vorrichtung, welche zur thermischen Bekämpfung von Unkraut geeignet ist, umfasst einen Durchlauferhitzer. Der Durchlauferhitzer ist eingerichtet, ein Fluid auf wenigstens eine, vorzugsweise vorgegebene Zieltemperatur zu erhitzen, welche für das Unkraut schädlich ist. Die vorgeschlagene Vorrichtung kann auch als Vorrichtung zur thermischen Unkrautbekämpfung oder als Unkrautbekämpfungsvorrichtung bezeichnet werden.

Unter der Bezeichnung "Durchlauferhitzer" ist in der vorliegenden Beschreibung insbesondere eine Heizeinrichtung zu verstehen, welche ein Fluid, wie beispielsweise eine Flüssigkeit, erhitzt, während es an der Heizeinrichtung vorbeiströmt oder während es die Heizeinrichtung durchströmt. Insbesondere ist darunter auch zu verstehen, dass eine Erwärmung des Fluids nach dem Durchlaufprinzip stattfindet.

Durch den Durchlauferhitzer ist ein zeitlich schnelles Erwärmen des Fluids auf die gewünschte Zieltemperatur begünstigt, denn es wird nur diejenige Menge des Fluids erwärmt, welche gerade den Durchlauferhitzer passiert. Dadurch ist auch etwaigen Wärmeverlusten entgegengewirkt. Aufgrund des Durchlauferhitzers können etwaige Aufheizzeiten oder sonstige Vorlaufzeiten klein gehalten werden, so dass beispielsweise eine relativ schnelle Betriebsbereitschaft zu erreichen ist.

Unter der Bezeichnung "Fluid" ist in der vorliegenden Beschreibung insbesondere jede Art von Materie im flüssigen oder gasförmigen Aggregatszustand zu verstehen. Auch können darunter Suspensionen und/oder Aerosole verstanden werden. Das Fluid kann eine Flüssigkeit sein, wie beispielsweise Wasser, insbesondere Leitungswasser. Auch kann das Fluid wasserbasiert sein und insbesondere Zusatzstoffe enthalten. Grundsätzlich kann das Fluid auch Dampf, wie beispielsweise Wasserdampf, enthalten oder daraus bestehen. Auch kann das Fluid ein Wasser-Dampf-Gemisch sein.

Unter der Bezeichnung "Zieltemperatur" ist in der vorliegenden Beschreibung insbesondere eine Temperatur zu verstehen, welche zu einer Schädigung oder Zerstörung der Zellstruktur einer Pflanze führt, beispielsweise wenn ein Fluid mit dieser Temperatur auf die Pflanze aufgebracht wird. Sofern Wasser als Fluid zum Einsatz kommt, handelt es sich beispielsweise um Heißwasser. Beispielsweise beträgt die Zieltemperatur wenigstens etwa 90 Grad Celsius. Beispielsweise liegt die Zieltemperatur in einem Bereich zwischen 90 Grad Celsius und 99 Grad Celsius, bevorzugt bei 93 Grad Celsius oder 94 Grad Celsius oder 95 Grad Celsius oder 96 Grad Celsius, beispielsweise um ein schnelles Absterben der Pflanze zu bewirken.

Beispielsweise ist die Zieltemperatur so bemessen, dass das erhitzte Fluid noch flüssig ist, insbesondere überwiegend oder vollständig flüssig ist. Darüber hinaus kann die Zieltemperatur auch so bemessen sein, dass das erhitzte Fluid dampfförmig, insbesondere überwiegend oder vollständig dampfförmig ist. Beispielsweise beträgt die Zieltemperatur dann wenigstens 100 Grad Celsius. Beispielsweise liegt die Zieltemperatur in einem Bereich zwischen 100 Grad Celsius und 150 Grad Celsius, insbesondere zwischen 110 Grad Celsius und 140 Grad Celsius, bevorzugt bei 115 Grad Celsius oder 120 Grad Celsius oder 125 Grad Celsius oder 130 Grad Celsius oder 135 Grad Celsius oder bei einem dazwischen liegenden Temperaturwert.

Unter der Bezeichnung "Unkraut" ist in der vorliegenden Beschreibung insbesondere jede Art von Pflanze zu verstehen, welche durch das auf die Zieltemperatur erhitze Fluid geschädigt wird. Unter der Bezeichnung "Unkraut" ist insbesondere ferner jede Art von Pflanze zu verstehen, welche unerwünscht ist. Beispielsweise fallen darunter Beikräuter und/oder Kulturplanzenbegleiter.

Der Durchlauferhitzer ist ausgebildet, elektrische Energie zum Erhitzen des Fluids zu nutzen. Ein solcher Durchlauferhitzer begünstigt eine kompakte Bauweise der Vorrichtung, da in diesem Fall der Durchlauferhitzer selbst relativ klein bauend sein kann.

Beispielsweise weist der Durchlauferhitzer zur elektrischen Beheizung des Fluids wenigstens ein elektrisches Heizelement, wie beispielsweise wenigstens einen Heizdraht oder wenigstens eine Heizwendel auf. Beispielsweise weist der Durchlauferhitzer wenigstens einen Leitungsabschnitt auf, welcher mit dem wenigstens einen elektrischen Heizelement wirkverbunden ist, um durch den Leitungsabschnitt durchströmendes Fluid zu erhitzen.

Die Vorrichtung umfasst ferner eine Ausbringeinrichtung. Die Ausbringeinrichtung ist eingerichtet, das Fluid oder ein Fluid, beispielsweise auf das Unkraut, auszubringen.

Beispielsweise weist die Ausbringeinrichtung eine Spritzeinrichtung, insbesondere wenigstens eine Spritzdüse auf, um das Fluid, beispielsweise auf das Unkraut, zu spritzen. Beispielsweise weist die Ausbringeinrichtung einen Schließmechanismus auf, um einen Durchgang für das Fluid zu verschließen, so dass dann kein Fluid mehr austreten kann, beispielsweise ein Ausbringbetrieb beendet oder unterbrochen ist. Insbesondere ist die Ausbringeinrichtung mit dem Durchlauferhitzer strömungsverbunden und/oder hydraulisch verbunden, so dass ein Strömungsweg von dem Durchlauferhitzer zu der Ausbringeinrichtung gebildet ist oder vorliegt.

Die Vorrichtung umfasst ferner einen Vorratsbehälter. Der Vorratsbehälter ist eingerichtet, das Fluid oder ein Fluid vorzugsweise in flüssigem Aggregatszustand zu bevorraten. Insbesondere ist die Ausbringeinrichtung mit dem Vorratsbehälter strömungsverbunden und/oder hydraulisch verbunden, so dass ein Strömungsweg von dem Vorratsbehälter, beispielsweise über den Durchlauferhitzer, zu der Ausbringeinrichtung gebildet ist oder vorliegt. Bevorzugt sind der Vorratsbehälter, der Durchlauferhitzer und die Ausbringeinrichtung derart miteinander strömungsverbunden und/oder hydraulisch verbunden, dass ein Strömungsweg von dem Vorratsbehälter über den Durchlauferhitzer zu der Ausbringeinrichtung gebildet ist.

Insbesondere ist ferner eine Fördereinrichtung vorgesehen, um das Fluid zu der Ausbringeinrichtung zu fördern, insbesondere um das Fluid entlang des Strömungsweges und/oder aus dem Vorratsbehälter, vorzugsweise über den Durchlauferhitzer, zu der Ausbringeinrichtung zu fördern. Beispielsweise ist die Fördereinrichtung eingerichtet, elektrisch angesteuert zu werden und/oder elektrisch angetrieben zu werden. Beispielsweise ist oder umfasst die Fördereinrichtung eine Pumpe. Durch den Vorratsbehälter und die Fördereinrichtung kann die Vorrichtung betrieben werden, ohne dafür an ein beispielsweise kommunales Fluidleitungssystem bzw. Fluidverteilsystem angeschlossen zu sein.

Die Vorrichtung weist ein Gehäuse auf, welches zweiteilig ist. Dadurch ist eine von außen geschützte Unterbringung der Komponenten der Vorrichtung ermöglicht.

Es sind ein erstes Gehäuse und ein zweites Gehäuse vorgesehen. Dadurch ist eine räumliche Trennung bzw. räumlich getrennte Anordnung der Komponenten der Vorrichtung möglich. Das erste Gehäuse und das zweite Gehäuse sind miteinander verbunden, insbesondere lösbar verbunden. Das erste Gehäuse ist ein unteres Gehäuse und das zweite Gehäuse ist ein oberes Gehäuse, welches beispielsweise zumindest teilweise oder vollständig oberhalb des unteren Gehäuses angeordnet ist.

Dem ersten Gehäuse ist der Vorratsbehälter zugeordnet und dem zweiten Gehäuse ist der Durchlauferhitzer und insbesondere die Fördereinrichtung zugeordnet. Dadurch ist eine räumlich getrennte Anordnung gegenüber dem Vorratsbehälter begünstigt.

Beispielsweise enthält das erste Gehäuse den Vorratsbehälter oder ist durch den Vorratsbehälter gebildet. Der Vorratsbehälter kann also integraler Bestandteil des ersten Gehäuses sein oder das erste Gehäuse ausbilden. Dadurch ist das erste Gehäuse in technisch einfacher Weise zu realisieren, da zur Ausbildung des ersten Gehäuses die Wandungen des Vorratsbehälters genutzt sein können.

Das erste Gehäuse ist gegenüber dem zweiten Gehäuse untenliegend angeordnet. Beispielsweise ist der dem untenliegenden bzw. unteren Gehäuse zugeordnete Vorratsbehälter nach oben hin offen ausgebildet oder hat in seinem oberen Bereich eine Öffnung, insbesondere eine Einfüllöffnung. Durch den unterliegenden Vorratsbehälter ist ein Befüllen und/oder Reinigen begünstigt, da durch Abheben des zweiten Gehäuses das untenliegende erste Gehäuse mit dem Vorratsbehälter von oben zugänglich ist.

Beispielsweise dient das zweite Gehäuse zur Einhausung des Durchlauferhitzers und/oder der Fördereinrichtung. Beispielsweise umfasst das zweite Gehäuse ein Deckelteil und ein Bodenteil, welche einen Aufnahmeraum für den Durchlauferhitzer und insbesondere die Fördereinrichtung bilden. Das zweite Gehäuse kann auf diese Weise eine separate Baueinheit bilden, in dem wesentliche Komponenten, beispielsweise elektrische Komponenten der Vorrichtung untergebracht sind. Dadurch ist eine kompakte und/oder geschützte Bauweise begünstigt.

Insbesondere ist es vorgesehen, dass das erste Gehäuse und/oder das zweite Gehäuse aus Kunststoff bestehen oder Kunststoff aufweisen, beispielsweise durch Spritzgießen gefertigte Bauteile sind. Grundsätzlich kann es auch vorgesehen sein, dass erste Gehäuse und/oder das zweite Gehäuse aus Metall bestehen oder Metall aufweisen.

Das zweite Gehäuse kann an dem ersten Gehäuse lösbar oder unlösbar angebunden bzw. befestigt sein. Beispielsweise ist das zweite Gehäuse an dem ersten Gehäuse über wenigstens ein Schraubenelement oder einen Bajonettverschluss angebunden bzw. befestigt. Auch können das erste Gehäuse und das zweite Gehäuse über eine Steckverbindung miteinander verbunden sein oder aufeinandergesetzt sein. Um das zweite Gehäuse und das erste Gehäuse gegen ein Lösen der Steckverbindung bzw. Abheben zu sichern, kann wenigstens ein Verriegelungselement vorgesehen sein.

Bei einer möglichen Ausführung ist das zweite Gehäuse lösbar an dem ersten Gehäuse derart angebunden bzw. befestigt, dass eine Öffnung des Vorratsbehälters verschlossen ist, wobei nach einem Lösen des zweiten Gehäuses von dem ersten Gehäuse die Öffnung freigelegt ist, insbesondere von außen zugänglich ist. Dadurch kann die Öffnung als Einfüllöffnung genutzt werden, beispielsweise um den Vorratsbehälter mit dem Fluid zu befüllen.

Ergänzend oder alternativ kann eine separate Einfüllöffnung vorgesehen sein, welche beispielsweise an dem ersten Gehäuse oder dem zweiten Gehäuse angeordnet ist und zum Befüllen des Vorratsbehälters mit dem Fluid dient bzw. genutzt werden kann. In diese Richtung zielt die Ausführungsform, bei der das zweite Gehäuse an dem ersten Gehäuse derart angebunden bzw. befestigt ist, dass die vorstehend beschriebene Öffnung oder eine Öffnung des Vorratsbehälters verschlossen ist, und das erste Gehäuse oder das zweite Gehäuse eine Einfüllöffnung beispielsweise außenseitig aufweist, welche mit der Öffnung des Vorratsbehälters strömungsverbunden ist, beispielsweise um darüber das Fluid in den Vorratsbehälter einzufüllen. Dadurch ist ein Befüllen des Vorratsbehälters erleichtert, da dazu das zweite Gehäuse von dem ersten Gehäuse nicht gelöst werden braucht.

Um eine hydraulische Verbindung zwischen dem Durchlauferhitzer und/oder der Fördereinrichtung herzustellen, kann ein Leitungsabschnitt, insbesondere ein flexibler Leitungsabschnitt, vorgesehen sein, welcher sich von dem zweiten Gehäuse, beispielsweise dem Bodenteil des zweiten Gehäuses, in den Vorratsbehälter erstreckt. Dadurch kann über den Leitungsabschnitt ein in dem Vorratsbehälter bevorratetes Fluid herausgebracht werden, um dann dem Durchlauferhitzer zugeführt zu werden. Beispielsweise ist die vorstehend beschriebene Öffnung des Vorratsbehälters genutzt, über welche der Leitungsabschnitt in den Innenraum des Vorratsbehälters eingreift.

Die Vorrichtung ist als mobile Vorrichtung ausgebildet. Die Vorrichtung weist wenigstens ein, vorzugsweise drehbar gelagertes Laufrad auf, um die Vorrichtung auf einem Untergrund fahren zu können. Ergänzend oder alternativ weist die Vorrichtung wenigstens ein Trageelement, wie beispielsweise einen Tragegriff, auf, um die Vorrichtung tragen zu können. Dadurch ist ein flexibler Einsatz der Vorrichtung begünstigt, da ein Transport der Vorrichtung ermöglicht ist oder zumindest erleichtert ist.

Bei einer weiteren Ausführungsform ist die Vorrichtung als handgeführte Vorrichtung ausgebildet. Insbesondere weist die Vorrichtung dazu eine Zug-/Schubstange auf, um darüber eine Vorschubbewegung der Vorrichtung händisch zu bewirken. Die Zug-/Schubstange kann als Bügel ausgebildet sein. Beispielsweise ist die Zug-/Schubstange höhenverstellbar, beispielsweise stufenlos oder in Stufen höhenverstellbar. Dazu kann ein entsprechender Mechanismus vorgesehen sein.

Bei einer weiteren Ausführungsform umfasst die Vorrichtung eine Trägerstruktur. Beispielsweise weist die Trägerstruktur ein Trägergestell auf oder ist als Trägergestell ausgebildet. Insbesondere ist die Trägerstruktur metallisch, weist also ein metallisches Material auf oder besteht aus einem metallischen Material. Dadurch ist ein stabiler Aufbau der Vorrichtung begünstigt.

In diese Richtung zielt beispielsweise auch die Maßnahme, dass an der Trägerstruktur das erste Gehäuse befestigt ist und/oder das wenigstens eine Laufrad befestigt ist, insbesondere drehbar gelagert ist, und/oder die Zug-/Schubstange ausgebildet ist, welche beispielsweise eine Querstange der Trägerstruktur sein kann. Dadurch kommt der Trägerstruktur eine Mehrfachfunktion zu, so dass eine Einsparung von Bauteilen begünstigt ist. Grundsätzlich können die Trägerstruktur und die Zug-/Schubstange auch separate Bauteile sein, welche lösbar miteinander verbunden sind, beispielsweise unter Ausbildung eine Steckverbindung miteinander verbunden sind.

Bei einer weiteren Ausführungsform umfasst die Vorrichtung eine Steuereinheit zum Ansteuern des Durchlauferhitzers, beispielsweise um eine von dem Durchlauferhitzer erbrachte oder zu erbringende Heizleistung bzw. Wärmeleistung so einzustellen, dass die wenigstens eine Zieltemperatur erreicht wird und/oder gehalten wird. Dadurch ist eine Maßnahme ergriffen, um die gewünschte Zieltemperatur möglichst exakt zu erreichen und/oder möglichst exakt zu halten, also mit einer relativ hohen Genauigkeit zu arbeiten. Dies begünstigt eine hohe Betriebssicherheit, um die schädigende Wirkung auf das Unkraut auch tatsächlich zu erreichen und während des Betriebes beizubehalten.

Unter der Bezeichnung "Steuereinheit" ist in der vorliegenden Beschreibung insbesondere eine elektronische Einheit beispielsweise einer Computer-Hardware zu verstehen. Bevorzugt dient die elektronische Einheit im Zusammenhang mit der Vorrichtung zum Steuern bestimmter Vorgänge und/oder Abläufe. Beispielsweise ist die elektronische Einheit ein Bestandteil einer elektronischen Regelung oder elektronischen Steuerung.

Die Steuereinheit kann eine digitale Verarbeitungseinheit aufweisen, die beispielsweise eine Mikroprozessoreinheit (CPU) umfasst. Die CPU kann mit einem Speichersystem und/oder Bussystem daten- und/oder signalverbunden sein. Die Steuereinheit kann ein oder mehrere Programme oder Programmmodule aufweisen. Die digitale Verarbeitungseinheit kann derart ausgebildet sein, dass Befehle, die als ein in einem Speichersystem abgelegtes Programm implementiert sind, abgearbeitet, Eingangssignale von einem Datenbussystem entgegengenommen und/oder Ausgangssignale an ein Datenbussystem abgegeben werden. Das Speichersystem kann ein oder mehrere, insbesondere verschiedene, Speichermedien aufweisen. Die Speichermedien können insbesondere optische und/oder magnetische Festkörper-Speichermedien und/oder andere, vorzugsweise nicht flüchtige Speichermedien sein.

Beispielsweise ist die Steuereinheit mit einer elektrischen Stromversorgungseinrichtung für den Durchlauferhitzer wirkverbunden. Beispielsweise ist die Steuereinheit eingerichtet, die elektrische Stromversorgungseinrichtung anzusteuern, um die Heizleistung des Durchlauferhitzers so einzustellen, dass die wenigstens eine Zieltemperatur erreicht wird und/oder gehalten wird. Dies geschieht beispielsweise in der Weise, dass über die elektrische Stromversorgungseinrichtung die elektrische Stromversorgung für den Durchlauferhitzer abwechselnd eingeschaltet und ausgeschaltet wird, also durch die Steuereinheit und über die Stromversorgungseinrichtung der Durchlauferhitzer in einem Ein/Aus-Betrieb betrieben wird. Ergänzend oder alternativ kann mittels der Steuereinheit die elektrische Stromversorgung für den Durchlauferhitzer gestuft oder stufenlos verändert werden.

Bei einer weiteren Ausführungsform ist die Steuereinheit zum Ansteuern der Fördereinrichtung eingerichtet, um eine von der Fördereinrichtung erbrachte oder zu erbringende Förderleistung so einzustellen, dass die wenigstens eine Zieltemperatur erreicht wird und/oder gehalten wird. Dadurch ist eine weitere Maßnahme ergriffen, um die gewünschte Zieltemperatur möglichst exakt zu erreichen und/oder möglichst exakt zu halten. Hierzu kann es auch vorgesehen sein, dass durch die Steuereinheit die Förderleistung der Fördereinrichtung und die Heizleistung des Durchlauferhitzers eingestellt wird, um die wenigstens eine Zieltemperatur zu erreichen und/oder aufrecht zu erhalten.

Beispielsweise ist die Steuereinheit mit einer elektrischen Stromversorgungseinrichtung für die Fördereinrichtung wirkverbunden. Beispielsweise ist die Steuereinheit eingerichtet, die elektrische Stromversorgungseinrichtung für die Fördereinrichtung anzusteuern, um die Förderleistung der Fördereinrichtung so einzustellen, dass die wenigstens eine Zieltemperatur erreicht wird und/oder gehalten wird. Dies geschieht beispielsweise in der Weise, dass über die elektrische Stromversorgungseinrichtung die elektrische Stromversorgung für die Fördereinrichtung abwechselnd eingeschaltet und ausgeschaltet wird, also durch die Steuereinheit und über die Stromversorgungseinrichtung die Fördereinrichtung in einem Ein/Aus-Betrieb betrieben wird. Grundsätzlich kann mittels der Steuereinheit die elektrische Stromversorgung für die Fördereinrichtung gestuft oder stufenlos verändert werden.

Die Stromversorgungseinrichtung für den Durchlauferhitzer und die Stromversorgungseinrichtung für die Fördereinrichtung können voneinander separate Einheiten sein oder in einer gemeinsamen Einheit vorliegen.

Die Vorrichtung, insbesondere die wenigstens eine elektrische Stromversorgungseinrichtung, ist beispielsweise eingerichtet, an ein elektrisches Stromnetz angeschlossen zu werden. Dazu kann ein elektrisches Netzkabel und beispielsweise ein daran vorhandener Netzstecker vorgesehen sein. Ergänzend oder alternativ kann die Vorrichtung, insbesondere die wenigstens eine elektrische Stromversorgungseinrichtung, eingerichtet sein, netzunabhängig betrieben zu werden. Dazu kann wenigstens ein elektrischer Energiespeicher, insbesondere Akkumulator, vorgesehen sein, welcher beispielsweise an der Vorrichtung vorzugsweise austauschbar angeordnet ist. Der elektrische Energiespeicher ist beispielsweise wiederaufladbar.

Bei einer weiteren Ausführungsform umfasst die Vorrichtung einen Temperaturfühler, welcher nachfolgend auch als Auslauftemperaturfühler bezeichnet ist. Bevorzugt ist der Temperaturfühler in Richtung des Strömungsweges von dem Durchlauferhitzer zur Ausbringeinrichtung gesehen, dem Durchlauferhitzer nachgeschaltet und zum Erfassen einer momentanen Auslauftemperatur des Fluids eingerichtet. Unter "dem Durchlauferhitzer nachgeschaltet" ist insbesondere auch zu verstehen, dass der Temperaturfühler im Bereich eines Ausgangs des Durchlauferhitzers angeordnet sein kann. Maßgebend ist, dass der Temperaturfühler an einer Stelle angeordnet ist, an welcher das Fluid erhitzt vorliegt.

Unter der Bezeichnung "Temperaturfühler" ist insbesondere jegliche Art von Einrichtung zur Erfassung von Temperatur umfasst. Die Einrichtung kann zur mittelbaren oder unmittelbaren Temperaturerfassung dienen. Die Einrichtung kann ferner zur direkten oder indirekten Temperaturerfassung dienen. Beispielsweise wird mittels des Temperaturfühlers die Temperatur des Fluids erfasst. Auch ist umfasst, dass eine mit der Temperatur des Fluids korrespondierende Temperatur oder dergleichen Messgröße herangezogen sein kann.

Insbesondere ist die Steuereinheit mit dem Auslauftemperaturfühler signalverbunden und eingerichtet, wenigstens ein Signal des Temperaturfühlers mit wenigstens einer Information über die momentane Auslauftemperatur zu verarbeiten bzw. auszuwerten, um die momentane Auslauftemperatur im Hinblick auf eine Einhaltung der wenigstens einen Zieltemperatur des Fluids zu überwachen. Durch den Auslauftemperaturfühler ist eine weitere Maßnahme ergriffen, um das Fluid möglichst genau auf die gewünschte Zieltemperatur zu erhitzen und/oder möglichst genau die gewünschte Zieltemperatur einzuhalten. Durch den Auslauftemperaturfühler erhält die Steuereinheit Informationen über Abweichungen der momentanen Auslauftemperatur von der Zieltemperatur, so dass beispielsweise gegebenenfalls Korrekturmaßnahmen eingeleitet werden können, beispielsweise durch Verändern der Heizleistung des Durchlauferhitzers und/oder Verändern der Förderleistung der Fördereinrichtung.

Eine weitere Ausführungsform besteht darin, dass die Steuereinheit zum Ansteuern der Fördereinrichtung eingerichtet ist, um ein Fördern zu beginnen bzw. die Fördereinrichtung zu starten, wenn der Durchlauferhitzer eine Heiztemperatur erreicht hat, welche eine vorgegebene Mindesttemperatur überschreitet oder einer vorgegebenen Mindesttemperatur entspricht. Dadurch ist es ermöglicht, dass das die Ausbringeinrichtung verlassende Fluid die Zieltemperatur bereits erreicht hat oder nur wenig unterhalb der Zieltemperatur vorliegt, beispielsweise wenn die Vorrichtung in Betrieb genommen wird und/oder es zur einer Aufheizung des Durchlauferhitzers kommt. Dazu bietet es sich an, dass die Mindesttemperatur kleiner als die Heiztemperatur im Arbeitsmodus bzw. Arbeitsbetrieb der Vorrichtung ist oder der Heiztemperatur im Arbeitsmodus bzw. Arbeitsbetrieb der Vorrichtung entspricht. Bevorzugt ist während eines Aufheizvorganges die Ausbringeinrichtung geöffnet, so dass ein Durchfluss von Fluid durch den Durchlauferhitzer stattfinden kann.

Grundsätzlich kann die Steuereinheit auch eingerichtet sein, die Fördereinrichtung erneut zum Fördern anzusteuern, beispielsweise wenn davor die Fördereinrichtung selbsttätig oder durch eine Ansteuerung der Steuereinheit das Fördern gestoppt hat. Bevorzugt ist das erneute Fördern durch die Fördereinrichtung nur möglich, wenn die Heiztemperatur des Durchlauferhitzers die Mindesttemperatur erreicht bzw. überschritten hat.

Es ist insbesondere vorgesehen, dass die Vorrichtung einen weiteren Temperaturfühler aufweist. Bevorzugt dient der weitere Temperaturfühler zum Erfassen einer momentanen Heiztemperatur des Durchlauferhitzers. Insofern ist der weitere Temperaturfühler nachfolgend auch als Heiztemperaturfühler bezeichnet. Beispielsweise ist der Heiztemperaturfühler in einem Bereich einer Heizungsoberfläche des Durchlauferhitzers angeordnet.

Es ist insbesondere ferner vorgesehen, dass die Steuereinheit mit dem Heiztemperaturfühler signalverbunden ist und eingerichtet ist, wenigstens ein Signal des Heiztemperaturfühlers mit wenigstens einer Information über die momentane Heiztemperatur zu verarbeiten bzw. auszuwerten, um die momentane Heiztemperatur im Hinblick auf eine Einhaltung der vorgegebenen Mindesttemperatur zu überwachen.

Bei einer weiteren Ausführungsform umfasst die Vorrichtung einen Drucksensor zum Erfassen eines momentanen Fluiddruckes des Fluids im Strömungsweg. Insbesondere ist die Steuereinheit mit dem Drucksensor signalverbunden und eingerichtet, wenigstens ein Signal des Drucksensors mit wenigstens einer Information über den momentanen Fluiddruck dahingehend auszuwerten bzw. zu verarbeiten, dass der Durchlauferhitzer ausgeschaltet wird und/oder die Fördereinrichtung ausgeschaltet wird, wenn der momentane Fluiddruck einen vorgegebenen Maximalwert erreicht oder übersteigt. Beispielsweise ist dies der Fall, wenn die Ausbringeinrichtung geschlossen ist, also ein Ausströmen des Fluids aus der Ausbringeinrichtung trotz fördernder Fördereinrichtung nicht oder nicht mehr stattfindet.

Insbesondere ist ferner eine Druckentlastungseinrichtung vorgesehen, welche sich bei Überschreiten eines vorzugsweise vorgegebenen maximal zulässigen Betriebsdruckes selbsttätig öffnet. Beispielsweise ist die Druckentlastungseinrichtung mit dem Strömungsweg des Fluids, insbesondere einer den Strömungsweg ausbildenden Fluidleitung, hydraulisch verbunden. Bevorzugt entspricht der vorstehend beschriebene Maximalwert dem maximal zulässigen Betriebsdruck, bei dem die Druckentlastungseinrichtung öffnet. Grundsätzlich kann der maximal zulässige Betriebsdruck auch über dem Maximalwert liegen.

Bei einer weiteren Ausführungsform umfasst die Vorrichtung einen Temperaturschalter. Insbesondere ist der Temperaturschalter mit dem Durchlauferhitzer wirkverbunden und eingerichtet, in einen Unterbrechungszustand zu schalten, wenn die Heiztemperatur des Durchlauferhitzers eine vorgegebene Maximaltemperatur erreicht. Beispielsweise ist in dem Unterbrechungszustand die elektrische Energieversorgung der Fördereinrichtung und/oder des Durchlauferhitzers unterbrochen oder reduziert. Ergänzend oder alternativ kann in dem Unterbrechungszustand die elektrische Energieversorgung der Fördereinrichtung und/oder des Durchlauferhitzers ausgeschaltet oder vermindert sein. Beispielsweise ist der Temperaturschalter eingerichtet, durch manuelle und/oder händische Betätigung von dem Unterbrechungszustand in einen Ausgangszustand zurückgeschaltet zu werden, in dem der Unterbrechungszustand aufgehoben ist.

Bei einer weiteren Ausführungsform umfasst die Vorrichtung einen Füllstandsensor zum Erfassen eines momentanen Füllstandes des Fluids in dem Strömungsweg oder in einer den Strömungsweg ausbildenden Fluidleitung. In diesem Fall ist beispielsweise die Steuereinheit mit dem Füllstandsensor signalverbunden und eingerichtet, wenigstens ein Signal des Füllstandsensors mit wenigstens einer Information über den momentanen Füllstand dahingehend auszuwerten bzw. zu verarbeiten, dass eine Alarminformation ausgegeben wird und/oder der Durchlauferhitzer ausgeschaltet wird oder in seiner Heizleistung reduziert wird und/oder die Fördereinrichtung ausgeschaltet wird oder in ihrer Förderleistung reduziert wird, wenn der momentane Füllstand einen vorgegebenen Minimalwert erreicht oder unterschreitet.

Bei einer weiteren Ausführungsform umfasst die wenigstens eine Zieltemperatur wenigstens zwei Zieltemperaturen, welche beispielsweise jeweils vorgegeben sind. Beispielsweise weist dazu die Vorrichtung eine Schalteinrichtung auf, welche zwischen wenigstens zwei Schaltstellungen wahlweise schaltbar ist, wobei in einer der wenigstens zwei Schaltstellungen eine erste Zieltemperatur für das Fluid und in der anderen Schaltstellung eine zweite Zieltemperatur für das Fluid vorgegeben sind. Beispielsweise sind die erste Zieltemperatur und die zweite Zieltemperatur jeweils für das Unkraut schädigend.

Beispielsweise liegen in der ersten Zieltemperatur das Fluid als Flüssigkeit und in der zweiten Zieltemperatur das Fluid als Dampf vor. Sofern das Fluid in dem Vorratsbehälter Wasser ist, kann für die erste Zieltemperatur ein Temperaturwert von 95 Grad Celsius vorgegeben sein. Das darauf erhitzte Fluid ist dann Heißwasser. Für die zweite Zieltemperatur kann ein Temperaturwert von 120 Grad Celsius vorgegeben sei. Das darauf erhitzte Fluid liegt in diesem Fall als Wasserdampf vor.

Nach einem Aspekt wird ferner eine Verwendung der vorstehend beschriebenen Vorrichtung zur thermischen Desinfektion und/oder thermischen Reinigung von Oberflächen bereitgestellt.

Unter der Bezeichnung "thermische Desinfektion" ist insbesondere eine Methode zu verstehen, welche auf eine vorzugsweise starke Erhitzung der zu desinfizierenden Oberfläche beruht, um darauf die Anzahl vermehrungsfähiger Mikroorganismen soweit zu reduzieren, dass eine mögliche Infektionsgefährdung durch diese Mikroorganismen verhindert ist. Beispielsweise zielt die Erhitzung der zu desinfizierenden Oberfläche darauf ab, darauf befindliche Keime, insbesondere vegetativen bakteriellen Keime, abzutöten und/oder Viren zu inaktivieren.

Das bei der thermischen Desinfektion genutzte Fluid kann identisch mit dem Fluid sein, welches bei der thermischen Unkrautbekämpfung genutzt wird. Ferner kann die bei der thermischen Desinfektion genutzte bzw. eingestellte wenigstens eine Zieltemperatur identisch mit der wenigstens einen Zieltemperatur sein, welche bei der thermischen Unkrautbekämpfung genutzt wird. Bei der thermischen Desinfektion sollte die Zieltemperatur wenigstens 90 Grad Celsius betragen. Wie bei der thermischen Unkrautbekämpfung kann auch bei der thermischen Desinfektion das Fluid in flüssigem Zustand, beispielsweise als Heißwasser, oder in dampfförmigen Zustand, beispielsweise als Wasserdampf oder Heißdampf, genutzt werden. Beispielsweise beträgt eine mögliche Zieltemperatur 100 Grad Celsius oder 121 Grad Celsius oder 134 Grad Celsius.

Unter der Bezeichnung "thermische Reinigung" ist insbesondere eine Methode zu verstehen, welche auf eine Erhitzung der zu reinigenden Oberfläche beruht, um darauf befindliche Verunreinigungen zu entfernen. Die Verunreinigungen können Staub und/oder chemische Substanzen und/oder organische Substanzen und/oder Mikroorganismen sein. Bei der thermischen Reinigung kann die Erhitzung der zu reinigenden Oberfläche so bemessen sein, dass eine Desinfektion der Oberfläche nicht oder weitgehend nicht bewirkt wird. Beispielsweise ist die thermische Reinigung ein Arbeitsgang, der einer thermischen Desinfektion der Oberfläche vorgeschaltet ist.

Das bei der thermischen Reinigung genutzte Fluid kann identisch mit dem Fluid sein, welches bei der thermischen Unkrautbekämpfung genutzt wird. Ergänzend können reinigungsverstärkende Zusätze genutzt sein, welche beispielsweise zusammen mit dem Fluid ausgebracht werden. Die Zusätze können dem Fluid beigemischt sein und beispielsweise gemeinsam mit dem Fluid in dem Vorratsbehälter bevorratet sein. Auch kann die Vorrichtung einen separaten Vorratsbehälter für die Bevorratung der Zusätze aufweisen.

Die bei der thermischen Reinigung genutzte bzw. eingestellte wenigstens eine Zieltemperatur kann identisch mit der wenigstens einen Zieltemperatur sein, welche bei der thermischen Unkrautbekämpfung genutzt wird. Bei der thermischen Reinigung kann die Zieltemperatur auch unterhalb von 90 Grad Celsius liegen. Die Zieltemperatur sollte wenigstens 40 Grad Celsius betragen und kann in einem Bereich zwischen 40 Grad Celsius und 60 Grad Celsius liegen. Wie bei der thermischen Unkrautbekämpfung kann auch bei der thermischen Desinfektion das Fluid in flüssigem Zustand, beispielsweise als Heißwasser, oder in dampfförmigen Zustand, beispielsweise als Wasserdampf oder Heißdampf, genutzt werden.

Bei den vorstehend beschriebenen Oberflächen, welche mittels der Vorrichtung gereinigt und/oder desinfiziert werden können, kann es sich um Oberflächen von Fußböden, Wänden oder sonstigen Flächenstrukturen und/oder um Oberflächen von Gegenständen, wie beispielsweise medizinische Geräte handeln.

Weitere Einzelheiten und Merkmale der Erfindung ergeben sich aus der nachfolgenden Beschreibung wenigstens eines Ausführungsbeispiels anhand der Zeichnung. Es zeigen:
- Fig. 1: eine mögliche Ausführungsform einer Vorrichtung zur thermischen Bekämpfung von Unkraut in einer schematischen Darstellung,
- Fig. 2: eine Ausführungsform der Vorrichtung gemäß der Figur 1 in einer perspektivischen Darstellung,
- Fig. 3: die Vorrichtung gemäß der Figur 2 in einer Seitenansicht,
- Fig. 4: die Vorrichtung gemäß der Figur 2 in einer Explosionsdarstellung,
- Fig. 5: eine weitere Ausführungsform der Vorrichtung gemäß der Figur 1 in einer perspektivischen Darstellung,
- Fig. 6: eine nochmals weitere Ausführungsform der Vorrichtung gemäß der Figur 1 in einer perspektivischen Darstellung, und
- Fig. 7: die Vorrichtung gemäß der Figur 6 in einer Seitenansicht.

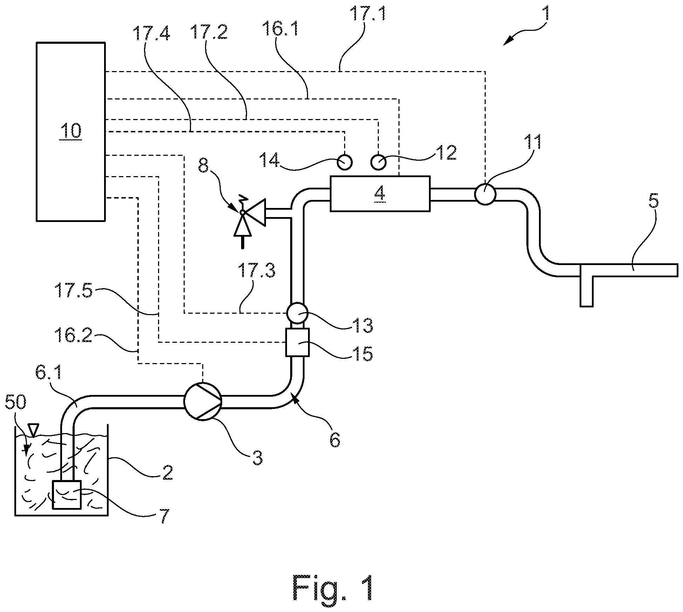

Figur 1 zeigt eine mögliche Ausführungsform einer Vorrichtung 1 zur thermischen Bekämpfung von Unkraut in einer schematischen Darstellung. Durch die Vorrichtung 1 ist es möglich, auf thermischem Wege Unkraut nachhaltig bis in die Wurzel zu schädigen. Grundsätzlich kann die Vorrichtung 1 auch genutzt werden, um Oberflächen beispielsweise von Gegenständen thermisch zu reinigen und/oder thermisch zu desinfizieren.

Die Vorrichtung 1 umfasst einen Vorratsbehälter 2, einen Durchlauferhitzer 4 und eine Ausbringeinrichtung 5, welche beispielsweise miteinander strömungsverbunden sind, sodass ein Strömungsweg von dem Vorratsbehälter 2 über den Durchlauferhitzer 4 zu der Ausbringeinrichtung 5 gebildet ist. Der Vorratsbehälter 2 ist eingerichtet, ein Fluid 50 zu bevorraten, welches sich beispielsweise in einem flüssigen Aggregatszustand befindet. Beispielsweise handelt es sich bei dem Fluid 50 um Wasser, insbesondere Leitungswasser.

Der Durchlauferhitzer 4 ist eingerichtet, das Fluid auf eine vorgegebene, das Unkraut schädigende Zieltemperatur zu erhitzen. Bevorzugt arbeitet der Durchlauferhitzer 4 nach dem Durchlaufprinzip, das heißt, das Fluid wird erhitzt, während es durch den Durchlauferhitzer 4 hindurchströmt oder an dem Durchlauferhitzer 4 vorbeiströmt. Bevorzugt ist die Zieltemperatur so bemessen, dass es zu einer Schädigung oder Zerstörung der Zellstruktur des Unkrauts kommt, wenn das auf die Zieltemperatur erhitzte Fluid auf das Unkraut aufgebracht wird. Der Durchlauferhitzer 4 ist ausgebildet, elektrische Energie zum Erhitzen des Fluids zu nutzen. Es handelt sich also um einen elektrisch beheizten Durchlauferhitzer. Beispielsweise hat der Durchlauferhitzer 4 wenigstens eine elektrische Heizwendel oder einen elektrischen Heizblock oder dergleichen elektrisches Heizelement.

Bevorzugt ist die Ausbringeinrichtung 5 eingerichtet, das Fluid auf das Unkraut auszubringen und/oder aufzubringen. Beispielsweise weist die Ausbringeinrichtung 5 eine Verteilereinrichtung auf, um das Fluid auf das Unkraut verteilt aufzubringen. Beispielsweise weist die Ausbringeinrichtung 5 eine Spritzdüse auf, um das Fluid auf das Unkraut zu spritzen oder zu sprühen. Beispielsweise weist die Ausbringeinrichtung 5 eine Spritzpistole auf, um das Fluid auf das Unkraut zu spritzen oder zu sprühen. Bevorzugt weist die Ausbringeinrichtung 5 einen beispielsweise händisch betätigbaren Verriegelungsmechanismus auf, um einen Durchgang oder Ausgang für das Fluid schließen zu können. Dazu kann der Verriegelungsmechanismus ein Betätigungselement aufweisen.

Bevorzugt umfasst die Vorrichtung 1 ferner eine Fördereinrichtung 3, um das Fluid entlang des Strömungsweges zu fördern, insbesondere aus dem Vorratsbehälter 2 über den Durchlauferhitzer 4 zu der Ausbringeinrichtung 5 zu fördern. Bevorzugt ist die Fördereinrichtung 3 eingerichtet, elektrische Energie zum Fördern des Fluids zu nutzen. Beispielsweise ist die Fördereinrichtung 3 elektrisch angetrieben. Beispielsweise ist die Fördereinrichtung 3 eine elektrisch angetriebene Pumpe. Bevorzugt ist die Fördereinrichtung 3 zwischen dem Vorratsbehälter 2 und dem Durchlauferhitzer 4 strömungsmäßig angeordnet.

Bevorzugt sind der Vorratsbehälter 2 und/oder die Fördereinrichtung 3 und/oder der Durchlauferhitzer 4 und/oder die Ausbringeinrichtung 5 über eine Leitung 6, insbesondere eine Rohrleitung, miteinander strömungsverbunden. Bevorzugt bildet die Leitung 6 gegebenenfalls zusammen mit wenigstens einem, vorzugsweise mehreren Durchgängen, welche von der Fördereinrichtung 3 und/oder dem Durchlauferhitzer 4 und/oder der Ausbringeinrichtung 5 gebildet sind, den Strömungsweg für das Fluid.

Bevorzugt weist die Leitung 6 einen Leitungsabschnitt 6.1 auf, welcher in den Vorratsbehälter 2 sich erstreckt und beispielsweise an seinem Ende einen Filter 7, insbesondere einen Schmutzfilter und/oder Partikelfilter, aufweist. Beispielsweise wird das in dem Vorratsbehälter 2 bevorratete Fluid 50 über den Filter 7 in den Leitungsabschnitt 6.1 von der Fördereinrichtung 3 angesaugt und anschließend über den Durchlauferhitzer 4 zu der Ausbringeinrichtung 5 gefördert.

Bevorzugt umfasst die Vorrichtung 1 eine vorzugsweise elektronische Steuereinheit 10 zum Ansteuern des Durchlauferhitzers 4, um eine von dem Durchlauferhitzer 4 ausgehende Heizleistung so einzustellen, dass die Zieltemperatur erreicht wird und/oder gehalten wird. Bevorzugt ist dazu die elektronische Steuereinheit 10 über wenigstens eine erste Steuerleitung 16.1 mit dem Durchlauferhitzer 4 signalverbunden.

Bevorzugt ist die Steuereinheit 10 auch zum Ansteuern der Fördereinrichtung 3 eingerichtet, um eine von der Fördereinrichtung 3 ausgehende Förderleistung so einzustellen, dass die Zieltemperatur erreicht wird und/oder gehalten wird. Bevorzugt ist dazu die elektronische Steuereinheit 10 über wenigstens eine zweite Steuerleitung 16.2 mit der Fördereinrichtung 3 signalverbunden.

Bevorzugt ist die Steuereinheit 10 eingerichtet, die Fördereinrichtung 3 und/oder den Durchlauferhitzer 4 über deren elektrische Stromversorgung anzusteuern. Beispielsweise ist eine (in der Figur 1 nicht dargestellte) elektrische Stromversorgungseinrichtung jeweils oder gemeinsam für die Fördereinrichtung 3 und den Durchlauferhitzer 4 vorgesehen. Beispielsweise steuert die Steuereinheit 10 die elektrische Stromversorgungseinrichtung an, um darüber auf die Fördereinrichtung 3 und/oder den Durchlauferhitzer 4 steuernd zu wirken, beispielsweise indem die elektrische Stromversorgung abwechselnd eingeschaltet und ausgeschaltet wird, also ein Ein/Aus-Betrieb stattfindet.

Bevorzugt weist die Vorrichtung 1 ferner einen Temperaturfühler 11 auf, welcher in Richtung des Strömungsweges von dem Durchlauferhitzer 4 zu der Ausbringeinrichtung 5 gesehen, dem Durchlauferhitzer 4 nachgeschaltet ist, beispielsweise im Bereich eines Strömungsausgangs des Durchlauferhitzers 4 angeordnet ist. Bevorzugt ist der Temperaturfühler 11 zum Erfassen einer Auslauftemperatur bzw. einer momentanen Auslauftemperatur des Fluids eingerichtet, also zum Erfassen der Temperatur des Fluids nach dessen Erhitzen in dem Durchlauferhitzer 4. Beispielsweise ist der Temperaturfühler 11 ein NTC-Thermistor oder umfasst einen NTC-Thermistor.

Bevorzugt ist der Temperaturfühler 11, beispielsweise über eine erste Signalleitung 17.1, mit der Steuereinheit 10 signalverbunden. Bevorzugt ist die Steuereinheit 10 eingerichtet, wenigstens ein Signal des Temperaturfühlers 11 mit wenigstens einer Information über die momentane Auslauftemperatur zu verarbeiten, um die momentane Auslauftemperatur im Hinblick auf eine Einhaltung der Zieltemperatur des Fluids zu überwachen. Insofern ermöglicht es der Temperaturfühler 11, dass in Abhängigkeit von der erfassten Auslauftemperatur, insbesondere momentanen Auslauftemperatur, die Heizleistung des Durchlauferhitzers 4 und/oder die Förderleistung der Fördereinrichtung 3 gesteuert und/oder geregelt wird.

Durch die Steuereinheit 10 ist es ermöglicht, einen Arbeitsbetrieb der Vorrichtung 1 zu überwachen. Durch die Steuereinheit 10 ist dazu beispielsweise gewährleistet, dass die vorgegebene Zieltemperatur aufrecht erhalten bleibt, insbesondere der über die Ausbringeinrichtung 5 ausgebrachte Fluidstrom die vorgegebene Zieltemperatur exakt oder zumindest annähernd exakt einhält.

Durch die Steuereinheit 10 ist es ferner ermöglicht, einen Anfahrbetrieb der Vorrichtung 1 zu überwachen, beispielsweise gezielt zu steuern und/oder zu regeln. Bevorzugt ist dazu die Steuereinheit 10 zum Ansteuern der Fördereinrichtung 3 eingerichtet, um ein Fördern zu beginnen, wenn der Durchlauferhitzer 4 eine Heiztemperatur erreicht hat, welche eine vorgegebene Mindesttemperatur überschreitet. Bevorzugt entspricht der vorgegebene Temperaturwert für die Mindesttemperatur im Wesentlichen der Heiztemperatur des Durchlauferhitzers 4 im Arbeitsbetrieb der Vorrichtung 1, um bereits zu Beginn eines Ausbringens des Fluids aus der Ausbringeinrichtung 5 das Fluid auf die Zieltemperatur oder annähernd auf die Zieltemperatur gebracht zu haben. Grundsätzlich kann der vorgegebene Temperaturwert für die Mindesttemperatur auch unter der Heiztemperatur des Durchlauferhitzers 4 im Arbeitsbetrieb der Vorrichtung 1 liegen.

Um die Heiztemperatur des Durchlauferhitzers 4 zu erfassen, ist bevorzugt ein weiterer Temperaturfühler 12 vorgesehen, welcher beispielsweise im Bereich oder an einer Heizungsoberfläche des Durchlauferhitzers 4 angeordnet ist. Beispielsweise ist der weitere Temperaturfühler 12 ein NTC-Thermistor oder umfasst einen NTC-Thermistor. Bevorzugt ist die Steuereinheit 10, beispielsweise über eine zweite Signalleitung 17.2, mit dem weiteren Temperaturfühler 12 signalverbunden. Bevorzugt ist die Steuereinheit 10 eingerichtet, wenigstens ein Signal des weiteren Temperaturfühlers 12 mit wenigstens einer Information über die Heiztemperatur, insbesondere die momentane Heiztemperatur, zu verarbeiten.

Bevorzugt umfasst die Vorrichtung 1 einen Drucksensor 13, welcher zum Erfassen eines momentanen Fluiddrucks des Fluids im Strömungsweg dient. Bevorzugt ist die Steuereinheit 10, beispielsweise über eine dritte Signalleitung 17.3, mit dem Drucksensor 13 signalverbunden. Bevorzugt ist die Steuereinheit 10 eingerichtet, wenigstens ein Signal des Drucksensors 13 mit wenigstens einer Information über den momentanen Fluiddruck dahingehend auszuwerten, dass der Durchlauferhitzer 4 ausgeschaltet wird oder in seiner Heizleistung abgesenkt wird und/oder die Fördereinrichtung 3 ausgeschaltet wird oder in ihrer Förderleistung abgesenkt wird, wenn der momentane Fluiddruck einen vorgegebenen Maximalwert erreicht. Dies ist beispielsweise der Fall, wenn der Strömungsweg bewusst verschlossen ist, weil beispielsweise an der Ausbringeinrichtung 5 ein entsprechendes Schließelement betätigt wurde. Auch ist dies beispielsweise der Fall, wenn im Strömungsweg eine Störung auftritt, weil beispielsweise ein flexibler Leitungsabschnitt der Leitung 6 einen Knick oder dergleichen aufweist.

Bevorzugt ist eine Druckentlastungseinrichtung 8 vorgesehen. Bevorzugt ist die Druckentlastungseinrichtung 8 dem Strömungsweg bzw. der Fluidleitung strömungsmäßig zugeordnet, beispielsweise mit der Fluidleitung strömungsverbunden. Bevorzugt ist die Druckentlastungseinrichtung 8 eingerichtet zu öffnen, wenn der Fluiddruck einen maximal zulässigen Betriebsdruck übersteigt. Der maximal zulässige Betriebsdruck kann vorbestimmt und/oder voreingestellt sein. Sofern die Druckentlastungseinrichtung 8 öffnet bzw. sich in einem geöffneten Zustand befindet, ist beispielsweise ein Abfließen des Fluids aus der Fluidleitung ermöglicht, sodass der momentane Fluiddruck in dem Strömungsweg bzw. der Fluidleitung sich absenkt.

Bevorzugt ist die Druckentlastungseinrichtung 8 eingerichtet, vorzugsweise selbsttätig zu schließen, wenn der Fluiddruck in dem Strömungsweg bzw. der Fluidleitung den maximal zulässigen Betriebsdruck unterschreitet oder einen vorgegebenen Schließdruck unterschreitet. Beispielsweise ist die Druckentlastungseinrichtung 8 Federdruck gesteuert. Bevorzugt ist die Druckentlastungseinrichtung 8 zwischen der Fördereinrichtung 3 und dem Durchlauferhitzer 4 zwischengeschaltet. Bevorzugt ist in Strömungsrichtung des Fluids gesehen, die Druckentlastungseinrichtung 8 dem Drucksensor 13 nachgeschaltet und beispielsweise dem Durchlauferhitzer 4 vorgeschaltet. Beispielsweise umfasst oder ist die Druckentlastungseinrichtung 8 ein Überdruckventil.

Bevorzugt weist die Vorrichtung 1 einen Temperaturschalter 14 auf. Bevorzugt ist der Temperaturschalter 14, beispielsweise über eine vierte Signalleitung 17.4, mit dem Durchlauferhitzer 4 wirkverbunden. Bevorzugt ist der Temperaturschalter 14 eingerichtet, in einen Unterbrechungszustand zu schalten, wenn die Heiztemperatur des Durchlauferhitzers 4 eine vorgegebene Maximaltemperatur erreicht. Bevorzugt ist in dem Unterbrechungszustand die elektrische Stromversorgung der Fördereinrichtung 3 und/oder des Durchlauferhitzers 4 unterbrochen oder ausgeschaltet oder die Heizleistung des Durchlauferhitzers und/oder die Förderleistung der Fördereinrichtung ist abgesenkt. Bevorzugt ist der Temperaturschalter 14 eingerichtet, durch manuelle Betätigung von dem Unterbrechungszustand in einen Ausgangszustand zurückgeschaltet zu werden, in dem der Unterbrechungszustand aufgehoben ist, also die Fördereinrichtung 3 bzw. der Durchlauferhitzer 4 mit elektrischer Energie versorgt wird.

Bevorzugt weist die Vorrichtung 1 einen Fluidmangelalarm auf. Bevorzugt ist dazu ein Füllstandsensor 15 vorgesehen, welcher zum Erfassen eines momentanen Füllstandes des Fluids in der Fluidleitung dient. Beispielsweise umfasst der Füllstandsensor 15 eine Wechselstromelektrode, um nach dem Prinzip der Leitfähigkeitsmessung den Füllstand zu erfassen. Bevorzugt ist in Strömungsrichtung des Fluids gesehen, der Füllstandsensor 15 dem Durchlauferhitzer 4 vorgeschaltet, beispielsweise zwischen der Fördereinrichtung 3 und dem Durchlauferhitzer 4 zwischengeschaltet.

Bevorzugt ist der Füllstandsensor 15, beispielsweise über eine fünfte Signalleitung 17.5, mit der Steuereinheit 10 wirkverbunden. Bevorzugt ist die Steuereinheit 10 eingerichtet, wenigstens ein Signal des Füllstandsensors 15 mit wenigstens einer Information über den momentanen Füllstand dahingehend auszuwerten, dass eine Alarminformation ausgegeben wird und/oder der Durchlauferhitzer 4 ausgeschaltet wird oder seine Heizleistung reduziert wird und/oder die Fördereinrichtung 3 ausgeschaltet wird oder ihre Förderleistung reduziert wird, wenn der momentane Füllstand einen vorgegebenen Minimalwert erreicht.

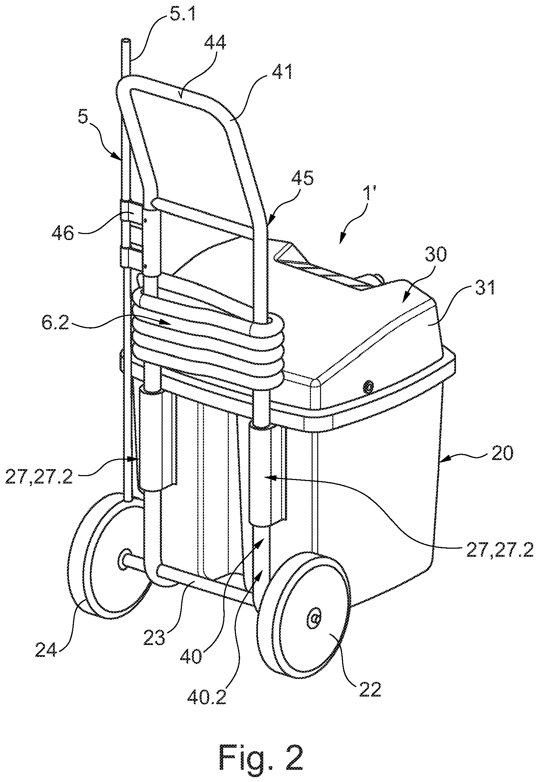

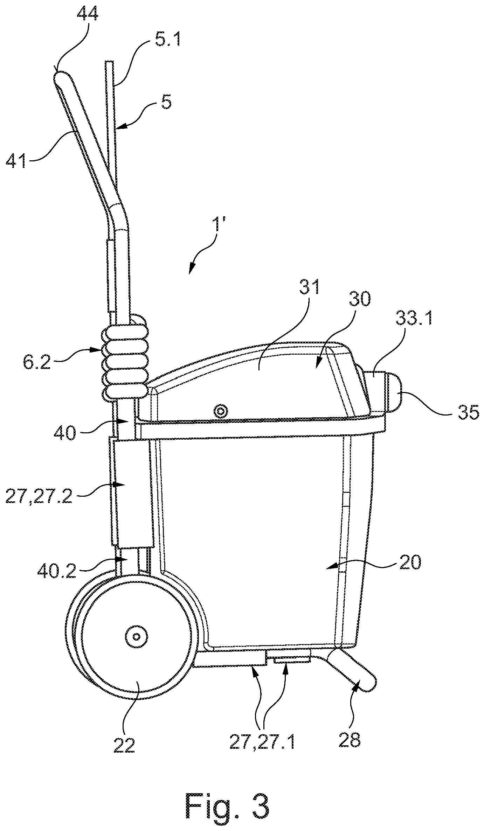

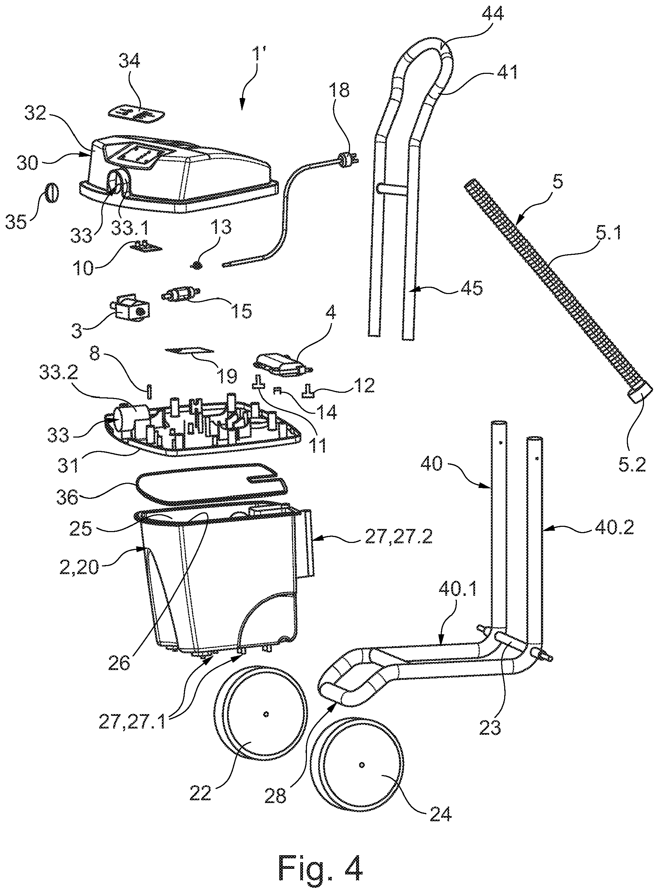

Figuren 2 und 3 zeigen eine weitere mögliche Ausführungsform einer Vorrichtung 1' zur thermischen Bekämpfung von Unkraut in einer perspektivischen Darstellung (Figur 2) und in einer Seitenansicht (Figur 3). Figur 4 zeigt darüber hinaus die Vorrichtung 1' beispielhaft in einer Explosionsdarstellung. Die Vorrichtung 1' ist beispielsweise in der Art und Weise aufgebaut wie die Vorrichtung 1 der Figur 1 und weist beispielsweise die technischen Funktionen der Vorrichtung 1 der Figur 1 auf. Bauteile der Vorrichtung 1' der Figuren 2 bis 4, welche mit Bauteilen der Vorrichtung 1 der Figur 1 baugleich oder funktionsgleich sind, sind mit gleichen Bezugszeichen versehen; insofern wird auf die Beschreibung zu der Vorrichtung 1 der Figur 1 verwiesen.

Die Vorrichtung 1' ist als mobile Vorrichtung ausgebildet. Die Vorrichtung 1' weist dazu wenigstens ein, vorzugsweise zwei Laufräder 22, 24 auf, um die Vorrichtung 1' auf einem Untergrund fahren zu können. Beispielsweise sind die Laufräder 22, 24 koaxial bezüglich einer Achse 23, insbesondere einer gemeinsamen Achse, angeordnet. Bevorzugt ist ferner die Vorrichtung 1' handgeführt. Die Vorrichtung 1' weist dazu beispielsweise eine vorzugsweise handgreifbare Zug-/Schubstange 41 auf, um darüber eine Vorschubbewegung der Vorrichtung 1' händisch zu bewirken. Zum Ergreifen weist die Zug-/Schubstange 41 beispielsweise eine Greiffläche 44 auf.

Die Vorrichtung 1' umfasst ein erstes Gehäuse 20 und ein zweites Gehäuse 30, welche miteinander verbunden sind. Beispielsweise ist das zweite Gehäuse 30 über mehrere (in den Figuren 2 bis 4 nicht dargestellte) Schraubenelemente an dem ersten Gehäuse 20 befestigt. Das erste Gehäuse 20 ist untenliegend und das zweite Gehäuse 30 ist obenliegend. Bevorzugt liegt das zweite Gehäuse 30 auf dem ersten Gehäuse 20 auf.

Bevorzugt umfasst die Vorrichtung 1' ferner eine Trägerstruktur 40, welche beispielsweise das erste Gehäuse 20 und/oder das zweite Gehäuse 30 trägt. Beispielsweise stützt sich das erste Gehäuse 20 an der Trägerstruktur 40 ab, insbesondere direkt ab, und/oder das erste Gehäuse 20 ist an der Trägerstruktur 40, beispielsweise über eine Befestigungsstruktur 27, befestigt.

Beispielsweise ist die Befestigungsstruktur 27 an dem ersten Gehäuse 20 ausgebildet, insbesondere angeformt. Die Befestigungsstruktur 27 umfasst beispielsweise Aufnahmen 27.1, 27.2 für die Trägerstruktur 40, insbesondere Rohrelemente der Trägerstruktur 40. Beispielsweise sind wenigstens eine der Aufnahmen 27.1, 27.2 an einer vertikalen Seite des ersten Gehäuses 20 und wenigstens eine andere der Aufnahmen 27.1, 27.2 an einer horizontalen Seite und/oder dem Boden des ersten Gehäuses 20 angeordnet.

Die Trägerstruktur 40 kann als Trägergestell, insbesondere Rohrgestell, ausgebildet sein. Bevorzugt hat die Trägerstruktur 40 einen horizontalen Abschnitt 40.1 und einen vertikalen Abschnitt 40.2. Bevorzugt liegt auf dem horizontalen Abschnitt 40.1 das erste Gehäuse 20 mit seinem Boden auf, beispielsweise unter Nutzung der wenigstens einen Aufnahme 27.1 der Befestigungsstruktur 27. Bevorzugt stützt sich das erste Gehäuse 20 mit einer vertikalen Seite gegen den vertikalen Abschnitt 40.2 ab, beispielsweise unter Nutzung der der wenigstens einen anderen Aufnahme 27.2 der Befestigungsstruktur 27.

Bevorzugt sind an der Trägerstruktur 40 die Laufräder 22, 24 drehbar gelagert. Beispielsweise ist die Achse 23 an der Trägerstruktur 40 angeordnet, insbesondere daran ausgebildet, beispielsweise ein Bestandteil der Trägerstruktur 40. Beispielsweise ist zwischen den Laufrädern 22, 24 das erste Gehäuse 20 angeordnet. Bevorzugt weist die Trägerstruktur 40, beispielsweise an einem vorderen Ende, ein Fußelement 28 bzw. Stützelement auf, über welches sich die Vorrichtung 1' zusammen mit den Laufrädern 22, 24 in einer Aufstellposition bzw. Standposition gegen einen Untergrund abstützt bzw. abstützen kann.

Bevorzugt ist an der Trägerstruktur 40 ferner die Zug-/Schubstange 41 angeordnet oder ausgebildet, beispielsweise als Querstange oder Längsstange. Beispielsweise ist die Zug-/Schubstange 41 ein Bestandteil eines Gestells 45, insbesondere Rohrgestells, welches mit einem Trägergestell der Trägerstruktur 40 verbunden ist, insbesondere lösbar verbunden ist. Bevorzugt ist das Gestell 45 u-förmig ausgebildet. Bevorzugt ist das Gestell 45 mit den freien Enden seiner Schenkel an der Trägerstruktur 40 befestigt, insbesondere unter Ausbildung einer Steckverbindung befestigt. Bevorzugt weisen die Schenkel jeweils einen Knick auf, so dass dadurch der Zwischenabschnitt zwischen den Schenkeln, an dem beispielsweise die Greiffläche 44 ausgebildet ist, in Richtung weg von dem ersten Gehäuse 20 und dem zweiten Gehäuse 30 versetzt ist.

Dem ersten Gehäuse 20 ist der Vorratsbehälter 2 zugeordnet. Bevorzugt weist das erste Gehäuse 20 einen Innenraum 26 auf. Bevorzugt bildet das erste Gehäuse 20 den Vorratsbehälter 2, wobei beispielsweise der Innenraum 26 den Innenraum des Vorratsbehälter 2 bildet. Bevorzugt ist das erste Gehäuse 20 nach oben hin offen. Beispielsweise weist das erste Gehäuse 20 dazu eine vorzugsweise obenliegende Öffnung 25 auf, über welche der Innenraum 26 erreichbar ist.

Dem zweiten Gehäuse 30 ist wenigstens der Durchlauferhitzer 4 zugeordnet. Bevorzugt ist dem zweiten Gehäuse 30 auch die Fördereinrichtung 3 zugeordnet. Bevorzugt weist das zweite Gehäuse 30 ein Bodenteil 31 und ein Deckelteil 32 auf, welche unter Ausbildung eines Aufnahmeraumes miteinander verbunden sind. Der Aufnahmeraum dient beispielsweise zur Aufnahme bzw. Behausung der Fördereinrichtung 3 und/oder des Durchlauferhitzers 4. Beispielsweise ist die Fördereinrichtung 3 und/oder der Durchlauferhitzer 4 an dem Bodenteil 31 aufgesetzt und/oder befestigt. Bevorzugt erstreckt sich von dem Bodenteil 31 ein (in den Figuren 2 bis 4 nicht dargestellter) Leitungsabschnitt in den Innenraum des Vorratsbehälters 2, um darüber das in dem Vorratsbehälter 2 bevorratete Fluid heraus zu fördern.

Bevorzugt bilden das Bodenteil 31 und das Deckelteil 32 eine separate, vorzugsweise geschlossene Einheit, welche das zweite Gehäuse 30 bildet und beispielsweise von oben auf das erste Gehäuse 20 aufgesetzt ist.

Bevorzugt sind dem zweiten Gehäuse 30 einzelne oder sämtliche hydraulischen und elektrischen Komponenten der Vorrichtung 1' zugeordnet, durch welche das in dem Vorratsbehälter 2 bevorratete Fluid angesaugt, erhitzt und ausgebracht wird. Bevorzugt bildet das zweite Gehäuse 30 dahingehend eine bauliche Einheit für diese Komponenten. Beispielsweise sind dem zweiten Gehäuse 30 die Fördereinrichtung 3 und/oder der Durchlauferhitzer 4 und/oder die Ausbringeinrichtung 5 und/oder die Druckentlastungseinrichtung 8 zugeordnet.

Bevorzugt ist das zweite Gehäuse 30 an dem ersten Gehäuse 20 derart befestigt, dass die Öffnung 25 des Vorratsbehälters 2 verschlossen ist. Bevorzugt ist zwischen dem ersten Gehäuse 20 und dem zweiten Gehäuse 30, insbesondere dem Bodenteil 31 des zweiten Gehäuses 30 ein Dichtelement 36, insbesondere ein Dichtring, angeordnet, beispielsweise um die Öffnung 25 des Vorratsbehälters 2 nach außen abzudichten. Bevorzugt weist das erste Gehäuse 20 eine Einfüllöffnung 33 auf, welche mit der Öffnung 25 des Vorratsbehälters 2 strömungsverbunden ist, um darüber das Fluid in den Vorratsbehälter 2 einzufüllen.

Beispielsweise sind dem zweiten Gehäuse 30 ferner die Stromversorgungseinrichtung 19 und/oder die Steuereinheit 10 und/oder der Temperaturfühler 11 und/oder der weitere Temperaturfühler 12 und/oder der Drucksensor 13 und/oder der Temperaturschalter 14 und/oder der Füllstandsensor 15 und/oder wenigstens eine der Steuerleitungen 16.1,16.2 und/oder wenigstens eine der Signalleitungen 17.1,17.2,17.3,17.4,17.5 zugeordnet und beispielsweise bis auf die Ausbringeinrichtung 5 in dem Aufnahmeraum untergebracht oder zumindest einzelne dieser Komponenten sind in dem Aufnahmeraum untergebracht.

Beispielsweise ist die Einfüllöffnung 33 ein Bestandteil eines Einfüllkanales 33.1, welcher beispielsweise an dem Bodenteil 31 angeordnet ist und beispielsweise in die Öffnung 25 des Vorratsbehälters 2 ragt und/oder in den Innenraum des Vorratsbehälters 2 mündet. Bevorzugt ist die Einfüllöffnung 33 durch einen Deckel oder dergleichen Abdeckung 35 verschlossen, welcher zum Befüllen des Vorratsbehälters 2 mit dem Fluid entfernt werden kann. Der bereits zu der Figur 1 beschriebene Leitungsabschnitt 6.1 erstreckt sich beispielsweise von dem zweiten Gehäuse 30, insbesondere dem Bodenteil 31 des zweiten Gehäuses 30 in den Vorratsbehälter 2, was in den Figuren 2 bis 4 nicht dargestellt ist.

Bevorzugt ist die Ausbringeinrichtung 5 außerhalb des zweiten Gehäuses 30 angeordnet. Beispielsweise ist die Ausbringeinrichtung 5 über einen vorzugsweise flexiblen Leitungsabschnitt 6.2, wie beispielsweise einen Schlauch, mit den innerhalb des zweiten Gehäuses 30 angeordneten hydraulischen Komponenten vorzugsweise lösbar strömungsverbunden. Bevorzugt hat die Ausbringeinrichtung 5 einen formstabilen und/oder starren Rohrabschnitt, wie beispielsweise eine Lanze 5.1. Bevorzugt ist daran an einem Ende eine Düseneinrichtung 5.2 und/oder Verteileinrichtung für das Fluid angeordnet.

Beispielsweise weist die Düseneinrichtung 5.2 wenigstens eine wechselbare Düse auf, beispielsweise um je nach benötigter Strahlbreite eine entsprechende Düse an die Düseneinrichtung 5.2 montieren zu können. Bevorzugt ist die Ausbringeinrichtung 5 von dem Leitungsabschnitt 6.2 abkoppelbar. Bevorzugt ist eine Halterung 46 vorgesehen, um daran die Ausbringeinrichtung 5 zu haltern, wenn die Vorrichtung 1' nicht betrieben wird. Beispielsweise ist die Halterung 46 an der Trägerstruktur 40 und/oder der Zug-/Schubstange 41 angebracht.

Beispielsweise erstreckt sich ferner ein elektrisches Stromkabel mit einem endseitig angeordneten Netzstecker 18 von dem zweiten Gehäuse 30 nach außen weg, um beispielsweise die Vorrichtung 1' an ein elektrisches Stromnetz anschließen zu können. Das elektrische Stromkabel ist beispielsweise mit der elektrischen Stromversorgungseinrichtung 19 der Vorrichtung 1' verbunden, insbesondere ein Bestandteil der elektrischen Stromversorgung der Vorrichtung 1.

Bevorzugt weist die Vorrichtung 1' eine (in den Figuren 2 bis 4 nicht dargestellte) Schalteinrichtung auf, welche zwischen wenigstens zwei Schaltstellungen wahlweise schaltbar ist. Beispielsweise ist in einer der wenigstens zwei Schaltstellungen eine erste Zieltemperatur für das Fluid und in der anderen Schaltstellung eine zweite Zieltemperatur für des Fluids vorgegeben. Bevorzugt liegt das Fluid in der ersten Zieltemperatur als Flüssigkeit und in der zweiten Zieltemperatur als Dampf vor. Durch die Schalteinrichtung kann also vorgegeben werden, ob das auf eine unkrautschädigende Temperatur erhitzte Fluid als Flüssigkeit oder als Dampf auf das Unkraut wirkt.

Bevorzugt ist an dem zweiten Gehäuse 30 oder dem ersten Gehäuse 20 ein Bedienfeld 34 angeordnet. Beispielsweise umfasst das Bedienfeld 34 eine optische Anzeige zum Anzeigen, ob die Vorrichtung 1' an das elektrische Stromnetz angeschlossen ist und gegebenenfalls eine optische Anzeige zum Anzeigen, ob das erhitzte Fluid in der vorgegebenen Zieltemperatur vorliegt. Auch kann das Bedienfeld 34 eine weitere optische Anzeige aufweisen, sofern die Vorrichtung 1' eine zweite vorgegebene Zieltemperatur bereitstellt. Die weitere optische Anzeige kann beispielsweise anzeigen, ob die zweite vorgegebene Zieltemperatur vorliegt.

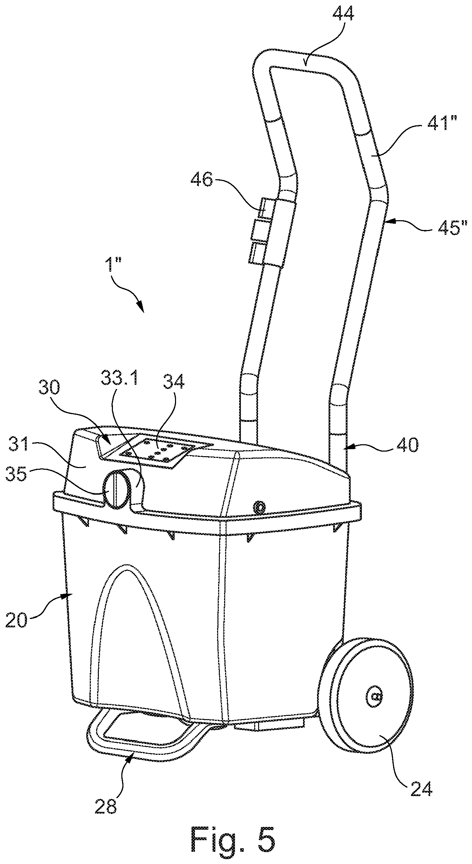

Figur 5 zeigt eine weitere Ausführungsform einer Vorrichtung 1" zur thermischen Bekämpfung von Unkraut beispielhaft in einer perspektivischen Darstellung. Bauteile der Vorrichtung 1" der Figur 5, welche mit Bauteilen der Vorrichtung 1' der Figuren 2 bis 4 baugleich oder funktionsgleich sind, sind mit gleichen Bezugszeichen versehen; insofern wird auf die Beschreibung zu der Vorrichtung 1' der Figuren 2 bis 4 verwiesen.

Die Vorrichtung 1" der Figur 5 unterscheidet sich von der Vorrichtung 1' der Figuren 2 bis 4 dadurch, dass eine Zug-/Schubstange 41" vorgesehen ist, welche in vertikaler Richtung z-förmig verläuft. Bevorzugt ist die Zug-/Schubstange 41" an einem u-förmigen Gestell 45" ausgebildet, dessen Schenkel den z-förmigen Verlauf der Zug-/Schubstange 41" aufweisen. Bevorzugt ist das Gestell 45" mit den freien Enden der Schenkel an der Trägerstruktur 40 befestigt, insbesondere unter Ausbildung einer Steckverbindung befestigt.

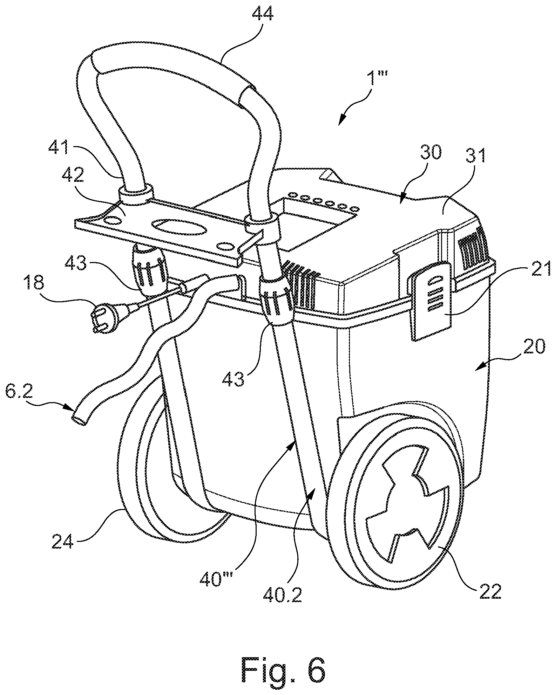

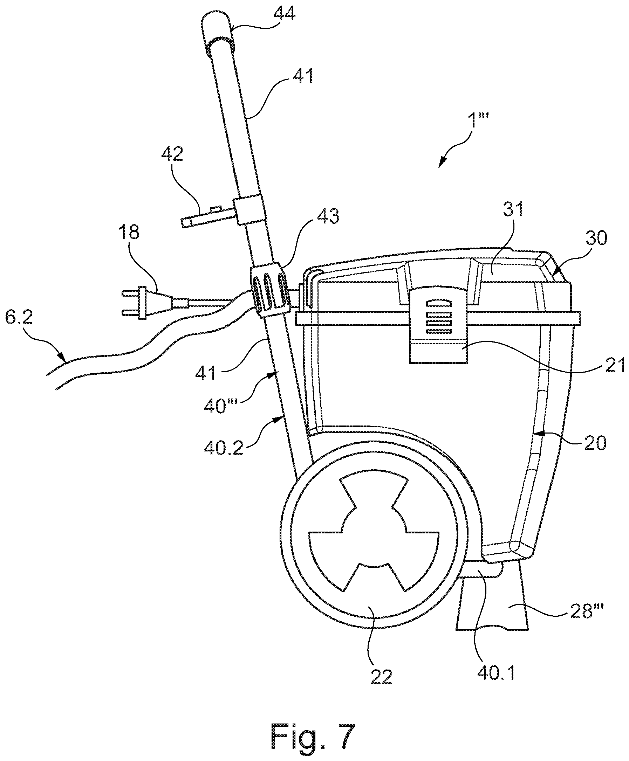

Figuren 6 und 7 zeigen eine nochmals weitere Ausführungsform einer Vorrichtung 1‴ zur thermischen Bekämpfung von Unkraut, beispielhaft dargestellt in einer perspektivischen Darstellung (Figur 6) und in einer Seitenansicht (Figur 7). Die Vorrichtung 1‴ ist beispielsweise in der Art und Weise aufgebaut wie die Vorrichtung 1 der Figur 1 und weist beispielsweise die technischen Funktionen der Vorrichtung 1 der Figur 1 auf. Bauteile der Vorrichtung 1‴ der Figuren 6 und 7, welche mit Bauteilen der Vorrichtung 1 der Figur 1 oder der Vorrichtung 1' der Figuren 2 bis 4 baugleich oder funktionsgleich sind, sind mit gleichen Bezugszeichen versehen; insofern wird auf die Beschreibung zu der Vorrichtung 1 der Figur 1 bzw. der Vorrichtung 1' der Figuren 2 bis 4 verwiesen.

Bei der Vorrichtung 1‴ sind das erste Gehäuse 20 und das zweite Gehäuse 30 miteinander lösbar verbunden, indem beispielsweise das zweite Gehäuse 30 auf das erste Gehäuse 20 vorzugsweise lose aufgelegt ist, beispielsweise aufgestülpt ist. Um das zweite Gehäuse 30 gegenüber dem ersten Gehäuse 20 gegen ein Lösen bzw. Abheben zu sichern, kann wenigstens ein Sicherungselement 21 vorgesehen sein. Beispielsweise ist das Sicherungselement 21 als Verriegelungselement ausgebildet, welches an einem der beiden Gehäuse 20, 30 befestigt ist und gegen das andere der beiden Gehäuse 20,30 in eine Verriegelungsposition gebracht werden kann bzw. gebracht ist.

Wenn das zweite Gehäuse 30 mit dem ersten Gehäuse 20 verbunden ist, ist die (in den Figuren 6 und 7 nicht sichtbare) Öffnung des Vorratsbehälters 2 verschlossen. Erst durch ein Abheben bzw. Lösen des zweiten Gehäuses 30 von dem ersten Gehäuse 20 wird diese Öffnung freigelegt. Eine Befüllung des Vorratsbehälters 2 mit dem Fluid erfolgt bei der Vorrichtung 1‴, wenn das zweite Gehäuse 30 abgenommen und die Öffnung freigelegt ist.

Bei der Vorrichtung 1‴ ist beispielsweise eine Längenverstellung 43 vorgesehen, um die Zug-/Schubstange 41 in ihrer Länge verstellen zu können. Ferner ist eine gegenüber der Trägerstruktur 40 dahingehend geänderte Trägerstruktur 40‴ vorgesehen, das kein Fußelement daran angeordnet ist. Es ist vielmehr wenigstens ein Fußelement 28‴ getrennt von der Trägerstruktur 40‴ vorgesehen. Bevorzugt ist das wenigstens eine Fußelement 28‴ an dem ersten Gehäuse 20 befestigt. An der Trägerstruktur 40‴ kann eine Ablagefläche 42 bzw. Aufnahmefläche für Werkzeug oder Zubehör der Vorrichtung 1‴ angeordnet sein.

Eine mögliche Funktionsweise der Vorrichtungen 1, 1', 1", 1‴ wird nachfolgend beispielhaft beschrieben: Es wird der Vorratsbehälter 2 mit Fluid, wie beispielsweise Wasser, befüllt. Anschließend wird der Netzstecker 18 an das elektrische Stromnetz angeschlossen. Bevorzugt wird die Ausbringeinrichtung 5 so eingestellt, dass ein Durchgang für das Fluid geöffnet ist.

Es wird nunmehr beispielsweise eine Einschalttaste betätigt, durch welche die Steuereinheit 10 eine Information erhält, dass der Durchlauferhitzer 4 gestartet werden kann. Hierauf wird mittels der Steuereinheit 10 der Durchlauferhitzer 4 gestartet, also der Durchlauferhitzer 4 beginnt zu heizen. Das Starten des Durchlauferhitzers 4 kann dadurch erfolgen, dass durch die Steuereinheit 10 die elektrische Stromversorgung des Durchlauferhitzers 4 eingeschaltet wird.

Sobald der Durchlauferhitzer 4 eine Heiztemperatur erreicht hat, welche der vorgegebenen Mindesttemperatur entspricht oder die vorgegebene Mindesttemperatur überschreitet, wird mittels der Steuereinheit 10 die Fördereinrichtung 3 gestartet, beispielsweise indem mittels der Steuereinheit 10 die elektrische Stromversorgung der Fördereinrichtung 3 eingeschaltet wird. Es wird nunmehr durch die Fördereinrichtung 3 begonnen, dass in dem Vorratsbehälter 2 bevorratete Fluid 50 heraus zu fördern und unter Erhitzen in dem Durchlauferhitzer 4 zu der Ausbringeinrichtung 5 zu fördern.

Der Durchlauferhitzer 4 heizt so lange, bis die Steuereinheit 10 über den Temperaturfühler 11 ein Temperatursignal erhält, das die darüber erfasste Auslauftemperatur die vorgegebene Zieltemperatur erreicht hat. Beispielsweise steuert die Steuereinheit 10 dann über einen Ein/Aus-Betrieb der elektrischen Stromversorgung die Heizleistung des Durchlauferhitzers 4 so, dass die erreichte Zieltemperatur gehalten wird. Eine optische Anzeige an dem Bedienfeld 34 zeigt an, wenn die Zieltemperatur erreicht ist. Die vorgegebene Zieltemperatur ist beispielsweise ein Temperaturwert von 95 Grad Celsius.

Wenn nunmehr ein Bediener den Durchgang der Ausbringeinrichtung 5 verschließt, beispielsweise indem der Bediener die Ausbringeinrichtung 5 entsprechend betätigt, dann erfasst die Steuereinheit 10 über den Drucksensor 13 eine Zunahme des Fluiddrucks in der Fluidleitung und steuert die Fördereinrichtung 3 zum Ausschalten oder zum Reduzieren der Förderleistung an, beispielsweise indem durch die Steuereinheit 10 die elektrische Stromversorgung der Fördereinrichtung 3 abgeschaltet wird oder unterbrochen wird oder abgesenkt wird. Ergänzend kann die Steuereinheit 10 auch den Durchlauferhitzer 4 ansteuern, um die Beheizung zu stoppen oder zu reduzieren, beispielsweise indem durch die Steuereinheit 10 die Stromversorgung des Durchlauferhitzers 4 abgeschaltet wird oder unterbrochen wird oder abgesenkt wird.

Um das Fluid auf eine andere vorgegebene Zieltemperatur zu beheizen, wird durch den Bediener die Schalteinrichtung betätigt. Der Durchlauferhitzer 4 heizt dann so lange, bis die Steuereinheit 10 über den Temperaturfühler 11 ein Temperatursignal erhält, dass die erfasste Auslauftemperatur die andere Zieltemperatur erreicht hat. Die Steuereinheit 10 steuert dann beispielsweise über einen Ein/Aus-Betrieb der elektrischen Stromversorgung die Heizleistung des Durchlauferhitzers 4 so, dass die andere Zieltemperatur gehalten wird. Die andere Zieltemperatur ist beispielsweise ein Temperaturwert von 120 Grad Celsius, so dass das erhitzte Fluid dampfförmig ist.

Bei den in der vorliegenden Beschreibung benannten Eckwerten für die Bereiche sind insbesondere auch die Eckwerte selbst für den jeweiligen Bereich mitumfasst. Auch sind durch die benannten Bereiche beliebige darin enthaltene Einzelwerte mitumfasst.

### Bezugszeichenliste

- 1, 1': Vorrichtung
- 1", 1‴: Vorrichtung
- 2: Vorratsbehälter
- 3: Fördereinrichtung
- 4: Durchlauferhitzer
- 5: Ausbringeinrichtung
- 5.1: Lanze
- 5.2: Düseneinrichtung
- 6: Leitung
- 6.1: Leitungsabschnitt
- 7: Filter
- 8: Druckentlastungseinrichtung

- 10: Steuereinheit
- 11: Temperaturfühler
- 12: Temperaturfühler
- 13: Drucksensor
- 14: Temperaturschalter
- 15: Füllstandsensor
- 16.1: erste Steuerleitung
- 16.2: zweite Steuerleitung
- 17.1: erste Signalleitung
- 17.2: zweite Signalleitung
- 17.3: dritte Signalleitung
- 17.4: vierte Signalleitung
- 17.5: fünfte Signalleitung
- 18: Netzstecker
- 19: Stromversorgungseinrichtung

- 20: erstes Gehäuse
- 21: Sicherungselement
- 22: Laufrad
- 23: Achse
- 24: Laufrad
- 25: Öffnung
- 26: Innenraum
- 27: Befestigungsstruktur
- 27.1: Aufnahme
- 27.2: Aufnahme
- 28, 28‴: Fußelement

- 30: zweites Gehäuse
- 31: Bodenteil
- 32: Deckelteil
- 33: Einfüllöffnung
- 33.1: Einfüllkanal
- 34: Bedienfeld
- 35: Abdeckung
- 36: Dichtelement

- 40, 40‴: Trägerstruktur
- 40.1: horizontaler Abschnitt
- 40.2: vertikaler Abschnitt
- 41, 41": Zug-/Schubstange
- 42: Ablage-/Aufnahmefläche
- 43: Längenverstellung
- 44: Greiffläche
- 45, 45": Gestell
- 46: Halterung

- 50: Fluid

## Patentansprüche

1. Mobile Vorrichtung (1; 1'; 1"; 1‴) zur thermischen Bekämpfung von Unkraut, umfassend
wenigstens ein Laufrad (22; 24) zum Fahren auf einem Untergrund und/oder wenigstens ein Trageelement zum Tragen,
einen Durchlauferhitzer (4) zum Erhitzen eines Fluids auf wenigstens eine Zieltemperatur, welche für das Unkraut schädlich ist, wobei der Durchlauferhitzer (4) ausgebildet ist, elektrische Energie zum Erhitzen des Fluids zu nutzen,
eine Ausbringeinrichtung (5) zum Ausbringen des Fluids,
ein erstes Gehäuse (20) und ein zweites Gehäuse (30), welche miteinander verbunden sind, wobei das erste Gehäuse (20) ein unteres Gehäuse und das zweite Gehäuse (30) ein oberes Gehäuse ist,
**dadurch gekennzeichnet, dass** dem ersten Gehäuse (20) ein Vorratsbehälter (2) zur Bevorratung von Fluid und dem zweiten Gehäuse (30) der Durchlauferhitzer (4) zugeordnet sind.

2. Vorrichtung nach Anspruch 1, wobei der Vorratsbehälter (2) und die Ausbringeinrichtung (5) miteinander strömungsverbunden sind, so dass ein Strömungsweg von dem Vorratsbehälter (2) über den Durchlauferhitzer (4) zu der Ausbringeinrichtung (5) gebildet ist, und wobei der Vorratsbehälter (2) eingerichtet ist, das Fluid (50) in flüssigem Aggregatszustand zu bevorraten, und die Ausbringeinrichtung (5) eingerichtet ist, das Fluid auf das Unkraut aufzubringen.

3. Vorrichtung nach Anspruch 1 oder 2, umfassend eine Fördereinrichtung (3), welche dem zweiten Gehäuse (30) zugeordnet ist und eingerichtet ist, das Fluid aus dem Vorratsbehälter (2) zu der Ausbringeinrichtung (5) zu fördern.

4. Vorrichtung nach einem der vorhergehenden Ansprüche, wobei das zweite Gehäuse (30) lösbar an dem ersten Gehäuse (20) derart befestigt ist, dass eine Öffnung (25) des Vorratsbehälters (2) verschlossen ist, wobei nach einem Lösen des zweiten Gehäuses (30) von dem ersten Gehäuse (20) die Öffnung (25) freigelegt ist.

5. Vorrichtung nach einem der vorhergehenden Ansprüche, wobei das zweite Gehäuse (30) an dem ersten Gehäuse (20) derart befestigt ist, dass eine Öffnung (25) des Vorratsbehälters (2) verschlossen ist, und wobei das erste Gehäuse (20) oder das zweite Gehäuse (30) eine Einfüllöffnung (33) aufweist, welche mit der Öffnung (25) des Vorratsbehälters (2) strömungsverbunden ist, um darüber das Fluid in den Vorratsbehälter (2) einzufüllen.

6. Vorrichtung nach einem der vorhergehenden Ansprüche, umfassend eine Trägerstruktur (40; 40"), an welcher das erste Gehäuse (20) befestigt ist und/oder das wenigstens eine Laufrad (22; 24) drehbar gelagert ist.

7. Vorrichtung nach einem der vorhergehenden Ansprüche, wobei die Vorrichtung (1'; 1"; 1‴) als handgeführte Vorrichtung (1') mit einer Zug-/Schubstange (41; 41") ausgebildet ist, um darüber eine Vorschubbewegung der Vorrichtung (1'; 1"; 1‴) händisch zu bewirken.

8. Vorrichtung nach einem der vorhergehenden Ansprüche, umfassend eine Steuereinheit (10) zum Ansteuern des Durchlauferhitzers (4), um eine von dem Durchlauferhitzer (4) erbrachte oder zu erbringende Heizleistung so einzustellen, dass die wenigstens eine Zieltemperatur erreicht wird und/oder gehalten wird.

9. Vorrichtung nach Anspruch 8, umfassend einen Temperaturfühler (11), welcher in Richtung des Strömungsweges von dem Durchlauferhitzer (4) zu der Ausbringeinrichtung (5) gesehen, dem Durchlauferhitzer (4) nachgeschaltet ist und zum Erfassen einer momentanen Auslauftemperatur des Fluids eingerichtet ist,
wobei die Steuereinheit (10) mit dem Temperaturfühler (11) signalverbunden ist und eingerichtet ist, wenigstens ein Signal des Temperaturfühlers (11) mit wenigstens einer Information über die momentane Auslauftemperatur zu verarbeiten, um die momentane Auslauftemperatur im Hinblick auf eine Einhaltung der wenigstens einen Zieltemperatur des Fluids zu überwachen.

10. Vorrichtung nach Anspruch 8 oder 9, wobei die Steuereinheit (10) zum Ansteuern der Fördereinrichtung (3) eingerichtet ist, um ein Fördern zu beginnen, wenn der Durchlauferhitzer (4) eine Heiztemperatur erreicht hat, welche eine vorgegebene Mindesttemperatur überschreitet.

11. Vorrichtung nach einem der Ansprüche 8 bis 10, umfassend einen Drucksensor (13) zum Erfassen eines momentanen Fluiddruckes des Fluids im Strömungsweg,
wobei die Steuereinheit (10) mit dem Drucksensor (13) signalverbunden ist und eingerichtet ist, wenigstens ein Signal des Drucksensors (13) mit wenigstens einer Information über den momentanen Fluiddruck dahingehend auszuwerten, dass der Durchlauferhitzer (4) ausgeschaltet wird und/oder die Fördereinrichtung (3) ausgeschaltet wird, wenn der momentane Fluiddruck einen vorgegebenen Maximalwert erreicht.

12. Vorrichtung nach einem der Ansprüche 8 bis 11, umfassend einen Temperaturschalter (14), welcher mit dem Durchlauferhitzer (4) wirkverbunden ist und eingerichtet ist, in einen Unterbrechungszustand zu schalten, wenn die Heiztemperatur des Durchlauferhitzers (4) eine vorgegebene Maximaltemperatur erreicht,
wobei in dem Unterbrechungszustand die elektrische Energieversorgung der Fördereinrichtung (3) und/oder des Durchlauferhitzers (4) unterbrochen oder reduziert ist.

13. Vorrichtung nach einem der Ansprüche 8 bis 12, umfassend einen Füllstandsensor (15) zum Erfassen eines momentanen Füllstandes des Fluids in dem Strömungsweg,
wobei die Steuereinheit (10) mit dem Füllstandsensor (15) signalverbunden ist und eingerichtet ist, wenigstens ein Signal des Füllstandsensors (15) mit wenigstens einer Information über den momentanen Füllstand dahingehend auszuwerten, dass eine Alarminformation ausgegeben wird und/oder der Durchlauferhitzer (4) ausgeschaltet oder in seiner Heizleistung reduziert wird und/oder die Fördereinrichtung (3) ausgeschaltet oder in ihrer Förderleistung reduziert wird, wenn der momentane Füllstand einen vorgegebenen Minimalwert erreicht.

14. Vorrichtung nach einem der vorhergehenden Ansprüche, umfassend eine Schalteinrichtung, welche in wenigstens zwei Schaltstellungen wahlweise schaltbar ist,
wobei in einer der wenigstens zwei Schaltstellungen eine erste Zieltemperatur für das Fluid und in der anderen Schaltstellung eine zweite Zieltemperatur für das Fluid vorgegeben sind, wobei die erste Zieltemperatur und die zweite Zieltemperatur jeweils für das Unkraut schädigend sind, und in der ersten Zieltemperatur das Fluid als Flüssigkeit und in der zweiten Zieltemperatur das Fluid als Dampf vorliegt.

15. Verwendung einer Vorrichtung (1; 11"; 1‴) nach einem der vorhergehenden Ansprüche zur thermischen Desinfektion und/oder thermischen Reinigung von Oberflächen.

## Claims

1. Mobile device (1; 1'; 1"; 1‴) for thermally controlling weeds, comprising
at least one running wheel (22; 24) for running on an underlying surface and/or at least one supporting element for providing support,
a continuous flow heater (4) for heating a fluid to at least one target temperature that is harmful to weeds, the continuous flow heater (4) being designed to use electrical energy for heating the fluid,
a delivery device (5) for delivering the fluid,
a first housing (20) and a second housing (30), which are connected to one another, the first housing (20) being a lower housing and the second housing (30) being an upper housing,
**characterized in that** the first housing (20) is assigned a storage container (2) for storing fluid and the second housing (30) is assigned the continuous flow heater (4).

2. Device according to Claim 1, the storage container (2) and the delivery device (5) being connected to one another in terms of flow, so that a flow path is formed from the storage container (2) via the continuous flow heater (4) to the delivery device (5), and the storage container (2) being designed to store the fluid (50) in the liquid state of aggregation, and the delivery device (5) being designed to deliver the fluid to the weeds.

3. Device according to Claim 1 or 2, comprising a conveying device (3), which is assigned to the second housing (30) and is designed to convey the fluid from the storage container (2) to the delivery device (5).

4. Device according to one of the preceding claims, the second housing (30) being detachably fastened to the first housing (20) in such a way that an opening (25) of the storage container (2) is closed, the opening (25) being exposed once the second housing (30) has been detached from the first housing (20).

5. Device according to one of the preceding claims, the second housing (30) being fastened to the first housing (20) in such a way that an opening (25) of the storage container (2) is closed, and the first housing (20) or the second housing (30) having a filling opening (33), which is connected in terms of flow to the opening (25) of the storage container (2), in order for the storage container (2) to be filled thereby with the fluid.

6. Device according to one of the preceding claims, comprising a support structure (40; 40"), to which the first housing (20) is fastened and/or on which the at least one running wheel (22; 24) is rotatably mounted.

7. Device according to one of the preceding claims, the device (1'; 1"; 1‴) being designed as a hand-held device (1') with a push-pull bar (41; 41"), in order for an advancing movement of the device (1'; 1"; 1‴) to be manually brought about thereby.

8. Device according to one of the preceding claims, comprising a control unit (10) for activating the continuous flow heater (4), in order to set a heating output that is provided or is to be provided by the continuous flow heater (4) in such a way that the at least one target temperature is reached and/or maintained.

9. Device according to Claim 8, comprising a temperature sensor (11), which is arranged downstream of the continuous flow heater (4), as seen in the direction of the flow path from the continuous flow heater (4) to the delivery device (5), and is designed for detecting a momentary running-out temperature of the fluid,
the control unit (10) being connected in signalling terms to the temperature sensor (11) and designed to process at least one signal of the temperature sensor (11) with at least one item of information concerning the momentary running-out temperature, in order to monitor the momentary running-out temperature with regard to the maintenance of the at least one target temperature of the fluid.

10. Device according to Claim 8 or 9, the control unit (10) being designed for activating the conveying device (3) in order to begin conveying when the continuous flow heater (4) has reached a heating temperature that exceeds a predetermined minimum temperature.

11. Device according to one of Claims 8 to 10, comprising a pressure sensor (13) for detecting a momentary fluid pressure of the fluid in the flow path,
the control unit (10) being connected in signalling terms to the pressure sensor (13) and designed to evaluate at least one signal of the pressure sensor (13) with at least one item of information concerning the momentary fluid pressure with the effect that the continuous flow heater (4) is switched off and/or the conveying device (3) is switched off if the momentary fluid pressure reaches a predetermined maximum value.

12. Device according to one of Claims 8 to 11, comprising a temperature switch (14), which is operatively connected to the continuous flow heater (4) and is designed to switch to an interrupting state if the heating temperature of the continuous flow heater (4) reaches a predetermined maximum temperature,
the electrical energy supply to the conveying device (3) and/or the continuous flow heater (4) being interrupted or reduced in the interrupting state.

13. Device according to one of Claims 8 to 12, comprising a filling-level sensor (15) for detecting a momentary filling level of the fluid in the flow path,
the control unit (10) being connected in signalling terms to the filling-level sensor (15) and designed to evaluate at least one signal of the filling-level sensor (15) with at least one item of information concerning the momentary filling state to the effect that alarm information is issued and/or the continuous flow heater (4) is switched off or is reduced in its heating output and/or the conveying device (3) is switched off or is reduced in its conveying output if the momentary filling level reaches a predetermined minimum value.

14. Device according to one of the preceding claims, comprising a switching device which can be switched according to choice into at least two switching positions,
a first target temperature for the fluid being predetermined in one of the at least two switching positions and a second target temperature for the fluid being predetermined in the other switching position, the first target temperature and the second target temperature each being harmful to the weeds, and the fluid taking the form of a liquid at the first target temperature and taking the form of steam at the second target temperature.

15. Use of a device (1; 1'; 1"; 1‴) according to one of the preceding claims for the thermal disinfection and/or thermal cleaning of surfaces.

## Revendications

1. Dispositif mobile (1; 1'; 1"; 1‴) pour la lutte thermique contre les mauvaises herbes, comprenant
au moins une roulette (22; 24) pour rouler sur un sol et/ou au moins un élément de transport pour le transport,
un chauffe-eau (4) pour chauffer un fluide à au moins une température cible qui est nocive pour les mauvaises herbes, le chauffe-eau (4) étant réalisé pour exploiter de l'énergie électrique pour le chauffage du fluide,
un équipement d'épandage (5) pour épandre le fluide,
un premier boîtier (20) et un deuxième boîtier (30) qui sont reliés l'un à l'autre, le premier boîtier (20) étant un boîtier inférieur et le deuxième boîtier (30) étant un boîtier supérieur,
**caractérisé en ce qu'**un réservoir (2) est associé au premier boîtier (20) pour stocker un fluide, et le chauffe-eau (4) est associé au deuxième boîtier (30).

2. Dispositif selon la revendication 1, dans lequel le réservoir (2) et l'équipement d'épandage (5) sont en liaison fluidique l'un avec l'autre de façon à former un trajet d'écoulement du réservoir (2) à l'équipement d'épandage (5) en passant par le chauffe-eau (4), et le réservoir (2) étant conçu pour stocker le fluide (50) dans un état physique liquide, et l'équipement d'épandage (5) étant conçu pour appliquer le fluide aux mauvaises herbes.

3. Dispositif selon la revendication 1 ou 2, comprenant un équipement de refoulement (3) qui est associé au deuxième boîtier (30) et est conçu pour refouler le fluide du réservoir (2) à l'équipement d'épandage (5).

4. Dispositif selon l'une quelconque des revendications précédentes, dans lequel le deuxième boîtier (30) est fixé de manière amovible au premier boîtier (20) de façon à fermer une ouverture (25) du réservoir (2), dans lequel l'ouverture (25) est dégagée une fois le deuxième boîtier (30) détaché du premier boîtier (20).

5. Dispositif selon l'une quelconque des revendications précédentes, dans lequel le deuxième boîtier (30) est fixé au premier boîtier (20) de façon à fermer une ouverture (25) du réservoir (2), et dans lequel le premier boîtier (20) ou le deuxième boîtier (30) présente un orifice de remplissage (33) qui est en liaison fluidique avec l'ouverture (25) du réservoir (2) afin de verser le fluide dans le réservoir (2) par l'intermédiaire de celui-ci.

6. Dispositif selon l'une quelconque des revendications précédentes, comprenant une structure de support (40; 40") à laquelle le premier boîtier (20) est fixé et/ou au moins une roulette (22; 24) est montée en rotation.

7. Dispositif selon l'une quelconque des revendications précédentes, dans lequel le dispositif (1'; 1"; 1‴) est réalisé sous la forme d'un dispositif guidé à la main (1') pourvu d'une barre de traction/poussée (41; 41") afin de provoquer manuellement un mouvement d'avance du dispositif (1'; 1"; 1‴) par l'intermédiaire de celle-ci.

8. Dispositif selon l'une quelconque des revendications précédentes, comprenant une unité de commande (10) pour piloter le chauffe-eau (4) afin de régler une puissance de chauffage produite ou à produire par le chauffe-eau (4) de telle sorte que ladite au moins une température cible soit atteinte et/ou maintenue.

9. Dispositif selon la revendication 8, comprenant une sonde de température (11) qui, vue dans la direction du trajet d'écoulement du chauffe-eau (4) à l'équipement d'épandage (5), est placée en aval du chauffe-eau (4) et est conçue pour détecter une température de sortie instantanée du fluide,
l'unité de commande (10) étant reliée à la sonde de température (11) pour la transmission de signaux et étant conçue pour traiter au moins un signal de la sonde de température (11) avec au moins une information concernant la température de sortie instantanée afin de surveiller la température de sortie instantanée en vue d'un maintien de ladite au moins une température cible du fluide.

10. Dispositif selon la revendication 8 ou 9, dans lequel l'unité de commande (10) est conçue pour piloter l'équipement de refoulement (3) afin de commencer un refoulement lorsque le chauffe-eau (4) a atteint une température de chauffage qui dépasse une température minimale prédéfinie.

11. Dispositif selon l'une quelconque des revendications 8 à 10, comprenant un capteur de pression (13) pour détecter une pression de fluide instantanée du fluide sur le trajet d'écoulement,
dans lequel l'unité de commande (10) est reliée au capteur de pression (13) pour la transmission de signaux et est conçue pour évaluer au moins un signal du capteur de pression (13) avec au moins une information concernant la pression de fluide instantanée dans ce sens que le chauffe-eau (4) est arrêté et/ou l'équipement de refoulement (3) est arrêté si la pression de fluide instantanée atteint une valeur maximale prédéfinie.

12. Dispositif selon l'une quelconque des revendications 8 à 11, comprenant un interrupteur thermostatique (14) qui est en relation fonctionnelle avec le chauffe-eau (4) et est conçu pour commuter sur un état d'interruption si la température de chauffage du chauffe-eau (4) atteint une température maximale prédéfinie,
dans lequel, à l'état d'interruption, l'alimentation en énergie électrique de l'équipement de refoulement (3) et/ou du chauffe-eau (4) est interrompue ou réduite.

13. Dispositif selon l'une quelconque des revendications 8 à 12, comprenant un capteur de niveau (15) pour détecter un niveau de remplissage instantané du fluide sur le trajet d'écoulement,
l'unité de commande (10) étant reliée au capteur de niveau (15) pour la transmission de signaux et étant conçue pour évaluer au moins un signal du capteur de niveau (15) avec au moins une information concernant le niveau de remplissage instantané dans ce sens qu'une information d'alarme soit sortie et/ou le chauffe-eau (4) soit arrêté ou réduit au niveau de sa puissance de chauffage et/ou l'équipement de refoulement (3) soit arrêté ou réduit au niveau de sa puissance de refoulement si le niveau de remplissage instantané atteint une valeur minimale prédéfinie.

14. Dispositif selon l'une quelconque des revendications précédentes, comprenant un équipement de commutation qui peut être commuté au choix dans au moins positions de commutation,
dans lequel, dans l'une des au moins deux positions de commutation, une première température cible est prédéfinie pour le fluide, et dans l'autre position de commutation, une deuxième température cible est prédéfinie pour le fluide, dans lequel la première température cible et la deuxième température cible sont respectivement nocives pour les mauvaises herbes, et à la première température cible le fluide est présent sous forme de liquide et à la deuxième température cible le fluide est présent sous forme de vapeur.

15. Utilisation d'un dispositif (1; 1'; 1"; 1‴) selon l'une quelconque des revendications précédentes pour la désinfection thermique et/ou le nettoyage thermique de surfaces.
